# EUROPEAN PATENT APPLICATION

(11) **EP 2 015 475 A1**
(43) Date of publication of application: **14.01.2009**
(21) Application number: 06745916.4
(22) Date of filing: 28.04.2006
(51) Int. Cl.: H04B 7/26

(54) **WIRELESS COMMUNICATION APPARATUS AND WIRELESS COMMUNICATION SYSTEM**

(71) Applicant: Mitsubishi Denki Kabushiki Kaisha, Chiyoda-ku Tokyo, 100-8310 (JP)
(72) Inventor: KATADA, Futoshi, Tokyo 100-8310 (JP); SUZUKI, Kuniyuki, Tokyo 100-8310 (JP)
(74) Representative: Popp, Eugen
(86) International application number: PCT/JP2006/309057
(87) International publication number: WO 2007/125607

(57) **Abstract**

An object of the present invention is to provide a wireless communication technique capable of maintaining excellent communication quality. In order to achieve this object, a wireless communication system includes base station equipment (1). The base station equipment (1) is capable of performing wireless communication with a plurality of mobile units (21). The base station equipment (1) detects the mobile units (21) which are not synchronized with the base station equipment (1). Then, the base station equipment (1) limits the transmission power to the mobile units (21) detected.

## Description

### TECHNICAL FIELD

The present invention relates to a wireless communication device and a wireless communication system.

### BACKGROUND ART

Conventionally, various techniques are proposed regarding a wireless communication system. For example, patent document 1 proposes a transmission timing control method capable of suppressing deterioration of speaking characteristics and interference between users, in a wireless communication system of a PDMA (Path Division Multiple Access) type.

Patent document 1: Japanese Patent Application Laid-Open No.2002-101448

According to a conventional wireless communication system, when a plurality of mobile units are simultaneously connected to one base station equipment, transmission power of the base station equipment becomes tremendously greater, and the mobile units can not be synchronized with the base station equipment in some cases. For example, like a case where the vehicle, on which a plurality of mobile units are mounted, goes through a tunnel, when a visual field around the vehicle is suddenly improved, setting of a plurality of channels is sometimes performed at the same time. In this case, the transmission power of the base station equipment is drastically increased, thus increasing interference between transmission signals, and it is difficult to bring the mobile units into synchronization with the base station equipment.

The same thing can be applied to the wireless communication system of WCDMA (Wideband Code Division Multiple Access) system. In the wiring system of the WCDMA system, the interference occurs between codes in some cases, due to an undetected path of a multipath transmission line, and collapse of orthogonality between codes by fading. This interference between codes is easily generated in proportion to the transmission power to the mobile units. Accordingly, when control of the transmission power to the plurality of mobile units are simultaneously performed and the transmission power of the base station equipment is instantaneously increased, the interference between codes is also increased and the mobile units can hardly be synchronized with the base station equipment. As a result, communication quality is deteriorated.

### DISCLOSURE OF INVENTION

An object of the present invention is to solve the above-described problem and to provide a wireless communication technique capable of maintaining excellent communication quality.

A first wireless communication device of the present invention is a wireless communication device capable of performing wireless communication with a plurality of opposite communication devices, including; a detection part that detects the opposite communication devices which are not synchronized with the wireless communication device; and a control part that controls the transmission power to the opposite communication devices, wherein the control part limits the transmission power to the opposite communication devices which are not synchronized with the wireless communication devices.

A second wireless communication device of the present invention is the wireless communication device capable of performing wireless communication with a plurality of opposite communication devices, including: a detection part that detects the opposite communication devices which are not synchronized with the wireless communication device; and a control part that controls the transmission power to the opposite communication devices, wherein when a plurality of opposite communication devices which are not synchronized with the wireless communication device are detected by the detection part, the control part increases the transmission power to the plurality of opposite communication devices which are not synchronized with the communication device in different time zones from one another among the plurality of opposite communication devices.

A third wireless communication device of the present invention is the wireless communication device capable of performing wireless communication with a plurality of opposite communication devices, including a detection part that detects the opposite communication devices which are new connection targets; a setting part that sets communication channels for the opposite communication devices which are new connection targets; and a control part that controls the setting of the communication channels in the setting part, wherein when the plurality of opposite communication devices, which are new connection targets are detected by the detection part, the control part controls the setting part to partially delay the setting of the communication channels for the plurality of opposite communication devices which are the new connection targets.

A fourth wireless communication device of the present invention is the wireless communication device capable of performing wireless communication with a plurality of opposite communication devices, including: a detection part that detects the opposite communication devices which are new connection targets; a setting part that sets communication channels for the opposite communication devices which are new connection targets; and a control part that controls the setting of the communication channels in the setting part, wherein the control part decides a period during which the setting of communication channels is not executed, according to the number of opposite communication devices for which the communication channels are newly set by the setting part in a prescribed time, and does not allow the setting part to execute the setting of communication channels during this period after the elapse of the prescribed time,.

A wireless communication system of the present invention includes a plurality of first wireless communication devices; and a second wireless communication device capable of performing wireless communication with the plurality of first wireless communication devices, wherein the first wireless communication device changes an increasing rate of transmission power to the second wireless communication device, according to the number of first wireless communication devices which are not synchronized with the second wireless communication device.

According to the first wireless communication device of the present invention, the transmission power to the opposite communication devices which are not synchronized with this wireless communication device is limited. Therefore, a tremendous increase of the transmission power in this wireless communication device can be suppressed. As a result, excellent communication quality can be maintained between this wireless communication device and the opposite communication devices.

According to the second wireless communication device of the present invention, the transmission power to the plurality of opposite communication devices which are not synchronized with this wireless communication device is increased in different time zones from one another among the plurality of opposite communication devices. Therefore, a tremendous increase of the transmission power in this wireless communication device can be suppressed. As a result, excellent communication quality can be maintained between this wireless communication device and the opposite communication devices.

According to the third wireless communication device of the present invention, the setting of the communication channels is partially delayed in the plurality of opposite communication devices which are the new connection targets. Therefore, a tremendous increase of the transmission power in this wireless communication device can be suppressed. As a result, excellent communication quality can be maintained between this wireless communication device and the opposite wireless communication devices.

According to the fourth wireless communication device of the present invention, the period during which setting of the communication channels is not executed is decided according to the number of opposite communication devices for which the communication channels are newly set in a prescribed timed, and the setting of the communication channels is not executed during this period after the elapse of the prescribed time. Therefore, a tremendous increase of the transmission power in the wireless communication device can be suppressed. As a result, excellent communication quality can be maintained between this wireless communication device and the opposite communication devices.

According to the wireless communication system of the present invention, since the first wireless communication device changes the increasing rate of the transmission power to the second wireless communication device according to the number of first wireless communication devices which are not synchronized with the second wireless communication device, a tremendous increase of the transmission power in the first wireless communication device can be suppressed. As a result, excellent communication quality can be maintained between the first and second wireless communication devices.

The object, characteristics, aspect, and advantage of the present invention will be apparent hereunder, by detailed explanation and attached drawings.

### BRIEF DESCRIPTION OF DRAWINGS

FIG. 1 is a block diagram illustrating a structure of a wireless communication system according to an embodiment 1 of the present invention.
FIG. 2 is a block diagram illustrating a structure of a base station equipment according to the embodiment 1 of the present invention.
FIG. 3 is a block diagram illustrating a structure of a mobile unit according to the embodiment 1 of the present invention.
FIG. 4 is a view illustrating an operation of a wireless communication system according to the embodiment 1 of the present invention.
FIG. 5 is a view illustrating the operation of the wireless communication system according to the embodiment 1 of the present invention.
FIG. 6 is a view illustrating the operation of the wireless communication system according to the embodiment 1 of the present invention.
FIG. 7 is a view illustrating a priority order of an establishment of synchronization in the wireless communication system according to the embodiment 1 of the present invention.
FIG. 8 is a view illustrating the priority order of the establishment of synchronization in the wireless communication system according to the embodiment 1 of the present invention.
FIG. 9 is a view illustrating the operation of the wireless communication system according to the embodiment 1 of the present invention.
FIG. 10 is a view illustrating the operation of the wireless communication system according to the embodiment 1 of the present invention.
FIG. 11 is a view illustrating the operation of the wireless communication system according to the embodiment 1 of the present invention.
FIG. 12 is a view illustrating the operation of the wireless communication system according to the embodiment 1 of the present invention.
FIG. 13 is a block diagram illustrating a structure of the wireless communication system according to an embodiment 2 of the present invention.
FIG. 14 is a block diagram illustrating a structure of a base station equipment according to the embodiment 2 of the present invention.
FIG. 15 is a block diagram illustrating a structure of a mobile unit according to the embodiment 2 of the present invention.

### BEST MODE FOR CARRYING OUT THE INVENTION

### Embodiment 1

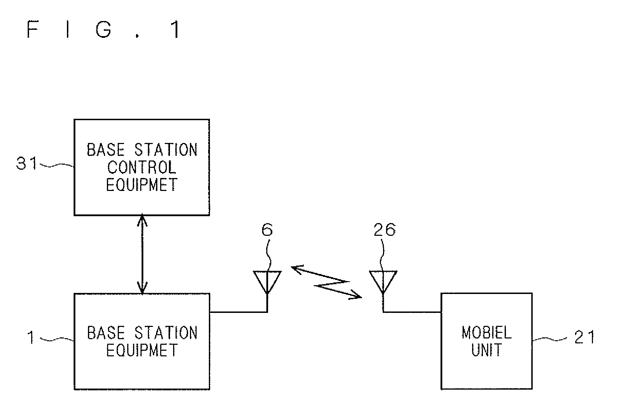

FIG. 1 is a block diagram illustrating a structure of a wireless communication system according to an embodiment 1 of the present invention. The wireless communication system according to this embodiment 1 is, for example, the wireless communication system of a WCDMA system. As illustrated in FIG. 1, the wireless communication system according to this embodiment 1 includes a base station equipment 1, mobile units 21, and a base station control equipment 31. The base station control equipment 31 performs wire communication with the base station equipment 1, and mainly controls the base station 1. The base station 1 can perform wireless communication with a plurality of mobile units 21, and the base station equipment 1 and the mobile units 21 are respectively wireless communication devices. FIG. 1 shows one of the plurality of mobile units 21.

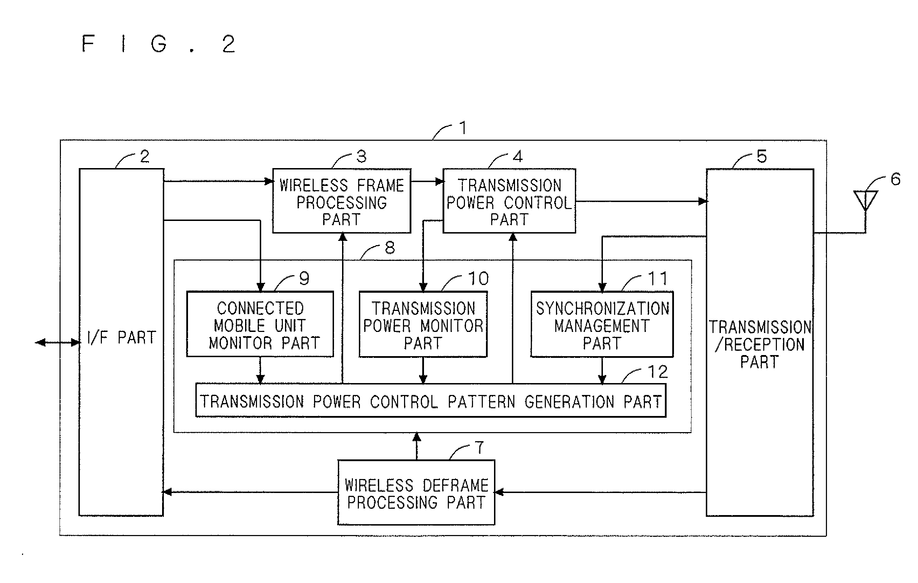

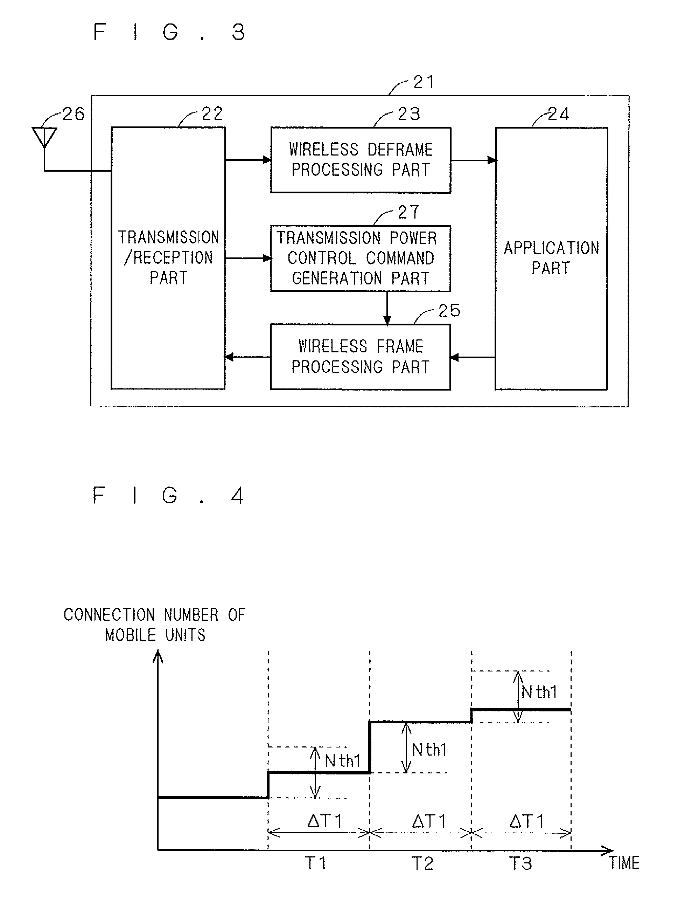

FIGS.2 and 3 are block diagrams illustrating the structure of the base station equipment 1 and the mobile units 21, respectively. As illustrated in FIG. 2, the base station equipment 1 is connected to the base station control equipment 31 by I/F part 2. A digital signal from the base station control equipment 31 is received by the I/F part 2, and is inputted in a wireless frame processing part 3 and a connected mobile unit monitor part 9 as will be described later. The wireless frame processing part 3 generates a transmission signal of a digital form, for every mobile unit 21 to be communicated, based on a signal from the base station control equipment 31, then executes CRC (Cyclic Redundancy Check) encoding processing, error correction coding processing, mapping to the wireless frame, and spreading processing using a spreading code, or the like, to output each transmission signal to a transmission power control part 4. The transmission power control part 4 performs control of the transmission power to each inputted transmission signal, together with a transmission power control pattern generation part 12 as will be described later, and outputs it to a transmission/reception part 5. The transmission/reception part 5 synthesizes each inputted transmission signal to generate a multiple transmission signal, and converts this multiple transmission signal to an analogue form. Then, the transmission/reception part 5 performs modulation processing to the multiple transmission signal of the analogue form, and thereafter applies frequency conversion to this multiple transmission signal up to a transmission frequency, power amplifies it, and outputs it to a plurality of mobile units 21 through an antenna 6.

In a WCDMA system, it is possible to simultaneously transmit the signal to a plurality of mobile units 21 positioned in the same sector from the base station equipment 1, by using the same frequency band. Therefore, the transmission power of the base station equipment 1 to a certain sector corresponds to the sum of the transmission power to each one of the plurality of mobile units 21 to which signals are transmitted simultaneously in this sector. Accordingly, as the number of mobile units 21 to be transmitted is increased, the transmission power of the base station equipment 1 becomes greater.

The signal received by the antenna 6 is frequency-converted to a prescribed lower frequency by the transmission/reception part 5, then subjected to demodulation processing to be converted to a signal of a digital form, and is inputted in a wireless deframe processing part 7. The wireless deframe processing part 7 performs dispreading processing to the inputted reception signal, and thereafter extracts a required signal from the wireless frame in the received signal, and executes error-correction decoding and CRC decoding, etc, to this signal, and outputs this signal to the I/F part 2 or a control part 8 as will be described later. The I/F part 2 outputs the inputted signal to the base station control equipment 31.

The base station equipment 1 further has the control part 8. The control part 8 includes a connected mobile unit monitor part 9, a transmission power monitor part 10, a synchronization management part 11, and a transmission power control pattern generation part 12. The connected mobile unit monitor part 9 acquires information regarding the mobile units 21 connected to the base station equipment 1. The transmission power monitor part 10 monitors the transmission power of the transmission signal, from a result of the transmission power control performed by the transmission power control part 4. The synchronization management part 11 performs quality measurement of a known data sequence from the result of the demodulation processing performed by the transmission/reception part 5, and grasps a synchronization state between the base station equipment 1 and the mobile units 21, from the result of this quality measurement. In the synchronization management part 11, RSSI (Received Signal Strength Indicator) measurement, SINR (Signal to Interference and Noise Ratio) measurement, BLER(Block Error Rate) measurement and BER(Bit Error Rate) measurement, etc, are performed. The transmission power control pattern generation part 12 generates a transmission power control pattern for deciding the transmission power to each mobile unit 21, based on transmission power control commands from the mobile units 21 as will be described later that is input through the wireless deframe processing part 7, and outputs this pattern to the transmission power control part 4. The transmission power control part 4 performs transmission power control individually to the transmission signal transmitted to each mobile unit 21 which is a communication object, based on the inputted transmission power control pattern. Thus, according to this embodiment 1, the transmission power control part 4 and the transmission power control pattern generation part 12 function as a control part for performing transmission power control. Thus, each transmission power to the simultaneously connected plurality of mobile units 21 is controlled individually.

In the mobile unit 21, the signal received by an antenna 26 is frequency-converted to a prescribed low frequency in the transmission/reception part 22, then is subjected to demodulation processing to be converted to a digital form, and is inputted in a wireless deframe processing part 23. The wireless deframe processing part 23 executes deframing processing to the inputted received signal, then extracts a required signal from the wireless frame in this received signal, and executes error-correction decoding processing and CRC decoding processing, etc, to this signal, and outputs it to an application part 24. The application part 24 executes a prescribed processing based on the inputted reception signal. For example, image display in a display part not shown is performed, or voice is outputted from a speaker not shown.

Meanwhile, the transmission signal generated in the application part 24 is inputted in a wireless frame processing part 25. The wireless frame processing part 25 executes the CRC encoding processing, error-correction encoding processing, mapping to the wireless frame, and spread processing using the spreading code, etc, to the inputted transmission signal, and outputs this transmission signal to the transmission/reception part 22. The transmission/reception part 22 converts the inputted transmission signal to the analogue form, and performs modulation processing to the transmission signal of this analogue form, then applies frequency conversion to this transmission signal up to the transmission frequency, power-amplifies it and outputs it to the base station equipment 1 through the antenna 26.

The mobile unit 21 further has a transmission power control command generation part 27. The transmission power control command generation part 27 performs quality measurement of the known data sequence from the result of the demodulation processing in the transmission/reception part 22, and from this quality measurement result, generates the transmission power control command to control the transmission power of the base station equipment 1. For example, when the quality of the known data sequence does not satisfy a prescribed reference, the transmission power control command generation part 27 generates the transmission power control command for notifying an increase of the transmission power to the mobile unit 21 to which this part belongs, and when this reference is satisfied, generates the transmission power control command for notifying a decrease of the transmission power to these mobile unit 21. RSSI measurement, SINR measurement, BLER measurement, and BER measurement, etc, are performed in the transmission power control command generation part 27.

Next, a transmission power control method in the base station equipment 1 according to this embodiment 1 will be explained in detail.

### (First transmission power control method)

According to a first transmission power control method, limiting the transmission power to the mobile units 21 not synchronized with the base station equipment 1 can suppress a tremendous increase of the transmission power of the base station equipment 1, thus ensuring the maintenance of excellent communication quality. Detailed explanation will be given hereunder.

Communication channel setting information notified from the base station control equipment 31 is inputted to the connected mobile unit monitor part 9 and the wireless frame processing part 3, through the I/F part 2. This communication cannel setting information includes a spreading code, a spreading factor, and an initial transmission power, etc, for specifying the mobile units 21 which are to be newly connected, in other words, the mobile units 21 for which communication channels are to be newly set.

The connected mobile unit monitor part 9 refers to the communication channel setting information from the base station control equipment 31, then detects a mobile unit 21 which is a new connection target in the same sector, and counts-up a counter value included inside, every time such a mobile unit 21 is detected. Then, the connected mobile unit monitor part 9 outputs this counter value to the transmission power control pattern generation part 12 as the number n of connected mobile units every time the counter value is counted up, together with the information identifying the mobile unit 21 which is a new connection target. Then, this counter value is reset every after the elapse of the unit time ΔT1. Accordingly, the number n of connected mobile units is the variable number that is counted up in a certain unit time ΔT1, every time a mobile unit 21 which is a new connection target is detected, and becomes zero after the elapse of the unit time ΔT1.

Here, the unit time ΔT1 is set to be the time normally necessary from the setting of the communication channels for the mobile units 21 which are connection targets by the base station equipment 1, until the synchronization of the mobile units 21 with the base station equipment 1 in a downlink direction. Accordingly, by counting the number of mobile units 21 which are new connection targets in the unit time ΔT1, it is possible to count the number of mobile units 21 which are not synchronized with the base station equipment 1 in a downlink direction, and as a result, the mobile units 21 not synchronized with the base station equipment 1 can be detected. Namely, the connected mobile unit monitor part 9 functions as a detection part which detects the mobile units 21 not synchronized with the base station equipment 1. Note that the unit time ΔT1 is set to an average value of the time on desk required from the setting of the communication channel until the synchronization of the mobile units with the base station equipment 1 in the downlink direction, or set to the time until the synchronization of 95% of the mobile units 21 with the base station equipment 1 in simulation. In addition, since the synchronization time depends on a propagation environment, it is effective to add a margin value to the unit time ΔT1 under setting conditions of the base station equipment 1, such as adding the margin value to the unit time ΔT1 for the base station equipment 1 set on the side of an expressway. The value of the number n of connected mobile units at the point in time when the unit time ΔT1 is ended, namely the sum of the mobile units 21 which become connection targets during the unit time ΔT1 is called "the number N1 of connected mobile units per unit time" hereafter.

Meanwhile, the wireless frame processing part 3 performs assignment of a wireless resource such as assignment of the spreading codes to the mobile units 21 which are new connection targets, based on the communication channel setting information from the base station control equipment 31, and sets the communication channels for these mobile units 21. Thereafter, the wireless frame processing part 3 generates the transmission signal for the mobile units 21 which are new connection targets, then performs CRC encoding processing and outputs it to the transmission power control part 4.

The transmission power control pattern generation part 12, in a certain unit time ΔT1, generates the transmission power control pattern for the mobile units 21 which are connection targets, by using the transmission power control commands notified from these mobile units 21 until the number n of connected mobile units exceeds a threshold value Nth1. Accordingly, in this case, the transmission power to each mobile unit 21 which is a connection target varies according to the transmission power control command sent from this mobile unit 21.

Meanwhile, when the number n of connected mobile units exceeds a prescribed threshold value Nth1 in a certain unit time ΔT1, for those mobile units 21 which was instructed by the base station control equipment 81 to be connected by then, the transmission power control pattern generation part 12 uses the transmission power control command sent from the mobile units 21 to generate the transmission power control patterns; and for those mobile units 21 which become connection targets thereafter, the transmission power control pattern generation part 12 generates the transmission power control patterns so that the transmission power to those mobile units 21 can be sufficiently small, without using the transmission power control commands sent from those mobile units 21.

Thus, in the first transmission power control method, the transmission power to the same number of mobile units 21, or fewer mobile units 21 than, the threshold value Nth1 out of the mobile units 21 which become new connection targets during the unit time ΔT1, varies according to the transmission power control command sent from the mobile units 21, and the transmission power to any excess mobile unit 21 above the threshold value Nth1 is limited to a sufficiently small value. The transmission power to any excess mobile unit 21 above the threshold value Nth1 may, for example, be set to zero, or may be set to an initial value of the transmission power at the time when the base station equipment 1 starts communication with the mobile units 21.

The transmission power control pattern generation part 12 generates the transmission power control pattern for the mobile units 21 with transmission power set at sufficiently small in a certain time ΔT1, by using the transmission power control commands notified from these mobile units 21 as per normal in the next unit time ΔT1. In addition, the transmission power control pattern generation part 12 sets the number of mobile units 21 with transmission power set at sufficiently small in the previous unit time ΔT1 as the initial value, and counts from this initial value the number of mobile units newly connected. For example, if the transmission power to three mobile units 21 is limited in a certain unit time ΔT1, the number n of connected mobile units starts to be counted up from "three" in the next unit time ΔT1. Then, in the same way as described above, in the next unit time ΔT1 also, until the number n of connected mobile units exceeds the threshold value Nth1, the transmission power control pattern generation part 12 generates the transmission power control patterns for the mobile units 21 which are connection targets, by using the transmission power control commands; and when the number n of connected mobile units exceeds the prescribed threshold value Nth1, for those mobile units 21 which was instructed to be connected by then, the transmission power control pattern generation part 12 uses the transmission power control commands from these mobile units to generate the transmission power control pattern, and for those mobile units 21 which become connection targets thereafter, the transmission power control pattern generation part 12 generates the transmission power control pattern so that the transmission power becomes sufficiently small.

Note that when not synchronized with the base station equipment 1 in the downlink direction, the mobile units 21 continue to transmit the transmission power control commands to the base station equipment 1 to notify the increase of the transmission power. Therefore, if there were no limit in the transmission power, the base station equipment 1 would increase the transmission power to these mobile units 21 at a prescribed increasing rate. Accordingly, the transmission power to the same number of mobile units 21 as, or fewer mobile units 21 than, the threshold value Nth1, out of the mobile units 21 which become new connection targets during the unit time ΔT1, is maintained to be increased, and the transmission power to any excess mobile unit 21 above the threshold value Nth1, is stopped to increase and limited to a small value.

FIG. 4 is a view illustrating a first transmission power control method according to this embodiment 1. As illustrated in FIG. 4, the number N1 of connected mobile units per unit time exceeds the threshold value Nth1 in a certain period T2, and therefore in the next period T3, the transmission power to any excess mobile unit 21 is increased.

As described above, in the first transmission power control method according to this embodiment 1, when the number of mobile units 21 which are newly to be connected exceeds the prescribed number, or in other words, when the number of mobile units 21 which are not synchronized with the base station equipment 1 is larger than the prescribed number, the transmission power to any excess mobile unit above the prescribed number is limited. Therefore, a tremendous increase of the transmission power in the base station equipment 1 can be avoided. As a result, excellent communication quality can be maintained between the base station equipment 1 and the mobile units 21.

### (Second transmission power control method)

In a second transmission power control method, when the number of newly connected mobile units 21 exceeds the prescribed number, a tremendous increase of the transmission power of the base station equipment 1 is suppressed by delaying the setting of the communication channels for any excess mobile unit 21 above the prescribed number, which makes it possible to ensure the maintenance of excellent communication quality. Explanation will be given hereunder, mainly on the difference from the first transmission power control method.

In the same way as the aforementioned first transmission power control method, the connected mobile unit monitor part 9 counts up the number n of connected mobile units and outputs this number n of connected mobile units to the transmission power control pattern generation part 12 per every count-up, together with the information for identifying the mobile units 21 which are new connection targets.

The transmission power control pattern generation part 12 generates the transmission power control pattern for the mobile units 21 which are connection targets, by using the transmission power control commands notified from these mobile units 21, until the number n of connected mobile units exceeds the threshold value Nth1 in a certain unit time ΔT1.

Meanwhile, when the number n of connected mobile units exceeds the prescribed threshold value Nth1 in a certain unit time ΔT1, for those mobile units 21 which was instructed by the base station control equipment 81 to be connected by then, the transmission power control pattern generation part 12 uses the transmission power control commands sent from the mobile units 21 to generate the transmission power control patterns; and for those mobile units 21 which become connection targets thereafter, the transmission power control pattern generation part 12 outputs to the wireless frame processing part 3 a notification that the setting of the communication channels is suspended (queued) and does not generate the transmission power control patterns for these mobile units 21. Accordingly, in this second transmission power control method, the transmission power control pattern generation part 12 functions as a control part for controlling the setting of the communication channels in the wireless frame processing part 3. Receiving the notification from the transmission power control pattern generation part 12, the wireless frame processing part 3 suspends the setting of the communication channels for these mobile units 21. Accordingly, at this point, no transmission signal is generated for these mobile units 21.

Thus, in this second transmission power control method, the communication channels are set for the same number of mobile units 21 as, or fewer mobile units 21 than, the threshold value Nth1, out of the mobile units 21 which become new connection targets in the unit time ΔT1, and the transmission power to these mobile units 21 varies according to the transmission power control command sent from the mobile units 21. Meanwhile, the setting of the communication channels for any excess mobile unit 21 above the threshold value Nth1 is delayed.

The transmission power control pattern generation part 12 notifies the wireless frame processing part 3 that the setting of the communication channels for those mobile units 21 whose communication-channel setting is suspended in a certain unit time ΔT1 will be performed in the next unit time ΔT1, and generates the transmission power control pattern by using the transmission power control commands notified from these mobile units 21. Receiving the notification from the transmission power control pattern generation part 12, the wireless frame processing part 3 sets the communication channels for these mobile units 21 and generates the transmission signals for these mobile units 21.

Also, the transmission power control pattern generation part 12 sets the number of mobile units 21 whose communication-channel setting is suspended in the previous unit time ΔT1, as the initial value in the next unit time ΔT1, and from this initial value, starts to count the number of mobile units which are new connection targets. For example, if the setting of the communication channels for three mobile units 21 was suspended in a certain unit time ΔT1, the number n of connected mobile units will be counted up from "3" in the next unit time ΔT1. Then, in the next unit time ΔT1 also, in the same way as described above, until the number n of connected mobile units exceeds the threshold value Nth1, the transmission power control pattern generation part 12 uses the transmission power control commands to generate the transmission power control patterns for the mobile units 21 which are connection targets; and when the number n of connected mobile units exceeds the prescribed threshold value Nth1, for those mobile units 21 which was instructed to be connected by then, the transmission power control pattern generation part 12 uses the transmission power control commands sent from the mobile units 21 to generate the transmission power control patterns, and for those mobile units 21 which become connection targets thereafter, the transmission power control pattern generation part 12 notifies the wireless frame processing part 3 that the setting of the communication channels for those mobile units 21 is suspended.

The above-described FIG. 4 is also a view illustrating a second transmission power control method according to this embodiment 1. As illustrated in FIG. 4, since the number N1 of connected mobile units per unit time exceeds the threshold value Nth1 in a certain period T2, the setting of the communication channels for any excess mobile unit 21 is performed in the next period T3.

As described above, in the second transmission power control method according to this embodiment 1, when the number of mobile units 21 which are new connection targets exceeds the prescribed number, the setting of the communication channels for the same number of mobile units 21 as, or fewer mobile units 21 than, the this prescribed number is delayed, so that a tremendous increase of the transmission power in the base station equipment 1 can be avoided. As a result, excellent communication quality can be maintained between the base station equipment 1 and the mobile units 21.

### (Third transmission power control method)

In the third transmission power control method, a period during which the setting of the communication channels is not executed, is decided according to the number of mobile units 21 whose communication channel setting has been performed during a prescribed time, and by not executing the setting of the communication channels in that period after the elapse of the prescribed time, a tremendous increase of the transmission power of the base station equipment 1 is suppressed, which ensures the maintenance of excellent communication quality. Explanation will be given hereunder, mainly on the difference from the first transmission power control method.

In the same way as the aforementioned first and second transmission power control methods, the connected mobile unit monitor part 9 counts up the number n of connected mobile units , and outputs the number n of connected mobile units to the transmission power control pattern generation part 12 per every count-up, together with the information for identifying the mobile units 21 which are new connection targets.

The transmission power control pattern generation part 12 generates the transmission power control patterns for the mobile units 21 which are new connection targets, by using the transmission power control commands notified from these mobile units 21, in a certain unit time ΔT1. Then, when this unit time ΔT1 is ended, the transmission power control pattern generation part 12 decides a period during which the setting of the communication channels (called "suspension period Tp" hereinafter) is not executed, according to the number N1 of connected mobile units per unit time in this unit time ΔT1, namely, the number of mobile units 21 whose communication-channel setting has been performed in a period of this unit time ΔT1, and outputs it to the wireless frame processing part 3 and the connected mobile unit monitor part 9. Here, the suspension time Tp is set to be an average time necessary for establishing the synchronization in the downlink direction from the setting of the communication channels in all the mobile units 21 which are connection targets. The suspension time Tp is preferably decided by conducting a test beforehand for each number of connections. Alternately, the suspension time Tp may be obtained by multiplying the unit time ΔT0 by the number N1 of connected mobile units per unit time. The unit time ΔT0 is normally set to be the same value as the aforementioned unit time ΔT1, but not necessarily be set to be this value, and may be set to be a different value. In the explanation given hereunder, the suspension time Tp is obtained by multiplying the unit time ΔT0 by the number N1 of connected mobile units per unit time.

When the suspension time Tp is notified, the wireless frame processing part 3 does not perform, in the suspension time Tp, the setting of the communication channels for the mobile units 21 which are connection targets notified from the base station control equipment 31 and the setting of the communication channels is suspended. Then, when the suspension time Tp is elapsed, the wireless frame processing part 3 performs the setting of the communication channels for the mobile units 21 whose communication-channel setting has been suspended.

Meanwhile, when the suspension time Tp is notified, the connected mobile unit monitor part 9 counts up the number n of connected mobile units, but outputs neither the value of the number n of connected mobile units nor the information for identifying the mobile units 21 which are connection targets to the transmission power control pattern generation part 12. Then, after the elapse of the suspension time Tp, the connected mobile unit monitor part 9 adds to the value of the number n of connected mobile units in the unit time ΔT1 at this time point, all the numbers N1 of connected mobile units per unit time in all unit times ΔT1 before this time point and within the suspension time Tp, and adapts the obtained value as a new value of the number n of connected mobile units in the present unit time ΔT1.

For example, when the number n of connected mobile units is "1" at the time point when the suspension period Tp elapses, and the numbers N1 of connected mobile units per unit time in two unit times ΔT1 before this time point and within this suspension time Tp are respectively "2" and "3", these values are all added to obtain a new value "6" as the number n of connected mobile units in the present unit time ΔT1. Accordingly, this new vale is the number of mobile units 21 whose communication-channel setting has been suspended. Then, the connected mobile unit monitor part 9 outputs this new number n of connected mobile units to the transmission power control pattern generation part 12 and outputs the information for identifying the mobile units 21 whose communication-channel setting has been suspended, to the transmission power control pattern generation part 12. Thereafter, the connected mobile unit monitor part 9 performs normal operation until the suspension period Tp is notified next. Namely, every time a mobile unit 21 which is a new connection target is detected, the connected mobile unit monitor part 9 counts up from the new value of the number n of connected mobile units and outputs the number n of connected mobile units and the information for identifying these mobile units 21 to the transmission power control pattern generation part 12, per every count-up.

Through the aforementioned operation, the transmission power control pattern generation part 12 does not generate, during the suspension period Tp, the transmission power control patterns for the mobile units 21 whose communication-channel setting has been suspended, and after the elapse of the suspension time Tp, generates the transmission power control patterns for the mobile units 21 whose communication-channel setting has been suspended, by using the transmission power control commands notified from these mobile units 21.

Thereafter, when the unit time ΔT1 is ended, the transmission power control pattern generation part 12 decides the suspension time Tp according to the number N1 of connected mobile units per unit time in this unit time ΔT1 and outputs it to the wireless frame processing part 3 and the connected mobile unit monitor part 9.

Note that when there is no unit time ΔT1 which is the time before the unit time ΔT1 at the time point when the suspension period Tp elapses and which is within this suspension time Tp, namely, when the suspension period Tp is shorter than the unit time ΔT1, the connected mobile unit monitor part 9 outputs the value of the number n of connected mobile units in the present unit time ΔT1 as it is to the transmission power control pattern generation part 12.

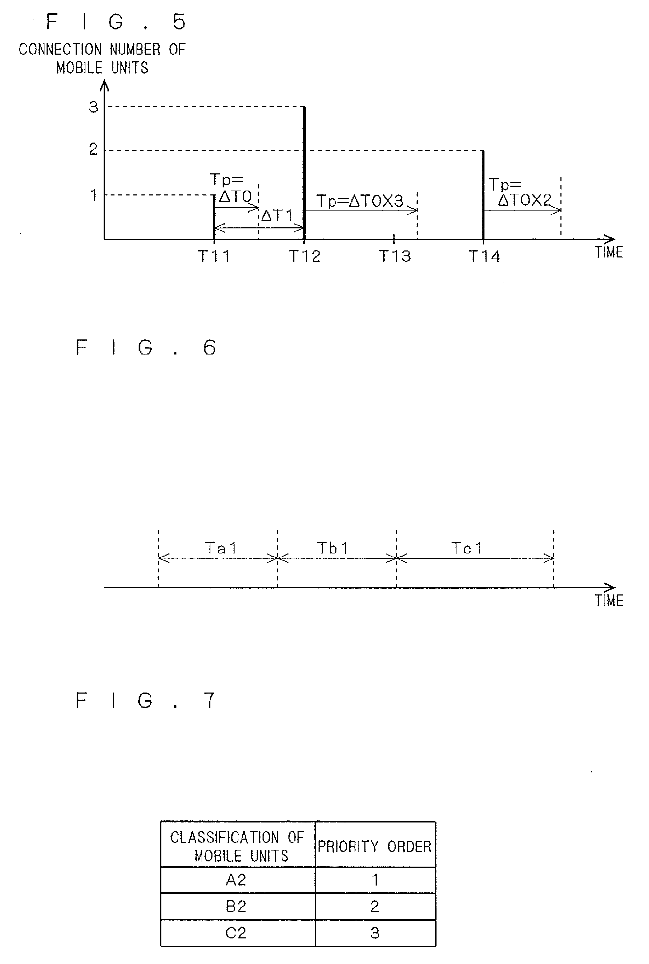

FIG. 5 is a view illustrating a third transmission power control method according to this embodiment 1. Each one of the times T11 to T14 taken on the horizontal axis in FIG. 5 shows the time point when the unit time ΔT1 is ended. As illustrated in FIG. 5, when the number N1 of connected mobile units per unit time is "1" in time T11, the setting of the communication channels is not executed during the period from time T11 to ΔT0. Then, when the number N of connected mobile units per unit time is "3" in time T12 after the elapse of ΔT0, the setting of the communication channels is not executed during the period from time T12 to (ΔT0 x 3). After the elapse of (ΔT0 x 3), and when the number N1 of connected mobile units per unit time is "2" in time T14, the setting of the communication channel is not executed during the period from time T14 to (ΔT0 x 2).

As described above, in the third transmission power control method according to this embodiment 1, the suspension period Tp, during which the setting of the communication channels is not executed, is decided according to the number of mobile units 21 whose communication-channel setting has been performed in the unit time ΔT, and the setting of the communication channels is not executed during the suspension period Tp after the elapse of this unit time ΔT1.

Normally, when the number of mobile units 21 which try to synchronize with the base station equipment 1 at the same period is increased, the interference between the mobile units 21 is also increased, thereby prolonging the time required for establishing the synchronization between the mobile units 21 and the base station equipment 1 in the downlink direction. Accordingly, by deciding the suspension period Tp, during which the setting of the communication channels is not executed, according to the number of mobile units whose communication-channel setting has been performed in the unit time ΔT1, the number of mobile units 21 which try to synchronize with the base station equipment 1 in the same period can be suppressed. As a result, a tremendous increase of the transmission power of the base station equipment 1 can be suppressed, which makes it possible to ensure the maintenance of excellent communication quality.

### (Fourth transmission power control method)

In a fourth transmission power control method, by increasing the transmission power for the plurality of mobile units 21 not synchronized with the base station equipment 1 in the different time zones from one another among the plurality of mobile units 21, a tremendous increase of the transmission power of the base station equipment 1 can be suppressed, which makes it possible to ensure the maintenance of excellent communication quality. Explanation will be given hereunder, mainly on the difference from the first transmission power control method.

In the same way as the aforementioned first to third transmission power control methods, the connected mobile unit monitor part 9 counts up the number n of connected mobile units and outputs the number n of connected mobile units to the transmission power control pattern generation part 12, per every count-up, together with the information for identifying the mobile units 21 which are new connection targets.

The transmission power control pattern generation part 12 classifiers the mobile units 21 which are new connection targets in a certain unit time ΔT1 into a plurality of groups. Namely, the mobile units 21 which are not synchronized with the base station equipment 1 are classified into a plurality of groups. For example, they are classified into groups of A1 to C1. First in the period Ta1, the transmission power control pattern generation part 12 generates the transmission power control patterns for the mobile units 21 which belong to group A1 by using the transmission power control commands notified from these mobile units 21, and generates the transmission power control patterns for the mobile units 21 which belong to the other groups, in the same way as the aforementioned first transmission power control method, so that the transmission power for these mobile units 21 becomes sufficiently small. As described above, when not synchronized with the base station equipment 1, the mobile units 21 continue to transmit, to the base station equipment 1, the transmission power control commands for notifying the increase of the transmission power, so that the transmission power to the mobile units 21 which belong to the group A1 is increased in the period Ta1.

The transmission power control pattern generation part 12 generates the transmission power control patterns for the mobile units 21 which belong to a group B1 in the period Tb1 subsequently to the period Ta1, by using the transmission power control commands notified from these mobile units 21, and generates the transmission power control patterns for the mobile units 21 which belong to the other groups so that the transmission power to these mobile units 21 becomes sufficiently small. Then, subsequently to the period Tb1, the transmission power control pattern generation part 12 generates the transmission power control patterns for the mobile units 21 which belong to the group C1 in the period Tc1, by using the transmission power control commands notified from these mobile units 21, and generates the transmission power control patterns for the mobile units 21 which belong to the other groups so that the transmission power for these mobile units 21 becomes sufficiently small. Thereafter, the same processing is performed in the next unit time ΔT1.

FIG. 6 is a view illustrating the fourth transmission power control method according to this embodiment 1. As illustrated in FIG. 6, the period Ta1 for increasing the transmission power to the mobile units 21 in the group A1, the period Tb1 for increasing the transmission power to the mobile units 21 in the group B1, and the period Tc1 for increasing the transmission power to the mobile units 21 in the group C1 are separated from one another.

Thus, in the fourth transmission power control method according to this embodiment 1, the transmission power to the plurality of mobile units 21 which are not synchronized with the base station equipment 1 is increased in the different time zones from one another among the plurality of mobile units 21, and therefore a tremendous increase of the transmission power of the base station equipment 1 can be suppressed. As a result, the maintenance of excellent communication quality can be ensured. According to the fourth communication power control method, although the time required for establishing the synchronization between the mobile units 21 and the base station equipment 1 is prolonged, compared to the aforementioned third transmission power control method, systematically stable operation is possible.

]Note that in the fourth transmission power control method, the mobile units 21 which are new connection targets in the unit time ΔT1, is classified into a plurality of groups, and the time zone is provided for executing the transmission power control based on the transmission power control commands for every group. However, a plurality of time zones for executing the transmission power control based on the transmission power control commands are prepared beforehand, for the mobile units 21 which are new connection targets in the unit time ΔT1, and in each time zone, an upper limit may be provided to the number of mobile units 21 for which the transmission power control is performed. For example, when three continuous time zones Td to Tf are provided in this order and the upper limit of the number is set to three in each time zone Td to Tf, then, in the time zone Td first, the transmission power control based on the transmission power control commands is performed for up to three mobile units 21. Then, when the number of mobile units exceeds three, , the transmission power control is performed in the time zone Te for four to six mobile units , and performed in the time zone Tf for seven to nine mobile units. In such a case also, the number of mobile units 21 which try to synchronize with the base station equipment 1 at the same time can be reduced, and therefore a tremendous increase of the transmission power between the mobile units and the base station equipment 1 can be suppressed.

### (Fifth transmission power control method)

In a fifth transmission power control method, the priority order of establishment of the synchronization is decided according to a state of the mobile units 21 which are not synchronized with the base station equipment 1, and an appropriate transmission power control is performed in consideration of this priority order. Explanation will be given hereunder mainly on the difference from the first transmission power control method.

In the same way as the aforementioned first to fourth transmission power control methods, the connected mobile unit monitor part 9 counts up the number n of connected mobile units , and outputs the number n of connected mobile units to the transmission power control pattern generation part 12 per every count-up, together with the information for identifying the mobile units 21 which are new connection targets. Here, the mobile units 21, which are new connection targets in a certain sector, are constituted of the mobile units 21 which have been moved by handover into this sector and the mobile units 21 whose power is turned on in this sector. The connected mobile unit monitor part 9 counts up the number n of connected mobile units and refers to the communication channel setting information from the base station control equipment 31 to specify the mobile units 21 which are new connection targets by handover in the unit time ΔT1 and the mobile units 21 which are new connection targets with the power turned on in this unit time ΔT1. Namely, in the connected mobile unit monitor part 9, the mobile units 21 for which the unit time ΔT1 has not yet elapsed since the setting of the communication channels and which are new connection targets by handover, and the mobile units 21 for which the unit time ΔT1 has not yet elapsed since the setting of the communication channels and which are new connection targets by power-on, are detected as the mobile units 21 which are not synchronized with the base station equipment 1. Then, the connected mobile unit monitor part 9 outputs the information for identifying the mobile units 21 which are new connection targets by handover, and the information for identifying the mobile units 21 which are new connection targets by power-on, to the transmission power control pattern generation part 12.

The synchronization management part 11 performs quality measurement of the known data sequence from the result of the demodulation processing in the transmission/reception part 5, and from this quality measurement result, detects a mobile unit 21 which has lost synchronization in an uplink direction, and counts up the value of the counter included inside, every time such a mobile unit 21 is detected. Then, the synchronization management part 11 outputs this counter value to the transmission power control pattern generation part 12 per every count-up, as the number m of synchronization lost mobile units , together with the information for identifying the mobile units 21 that lost synchronization. Then, this counter value is reset every after the elapse of the unit time ΔT1. Accordingly, the number m of synchronization lost mobile units is variable that is counted up every time a mobile unit 21 which has lost synchronization in the uplink direction is detected, and becomes "zero" after the elapse of the unit time ΔT1. The value of the number m of synchronization lost mobile units at the time point when the unit time ΔT1 is ended, is called "the number M1 of synchronization lost mobile units per unit time". Thus, the synchronization management part 11 functions as a detection part for detecting the mobile units 21 that lost synchronization with the base station equipment 1 in the uplink direction.

The transmission power control pattern generation part 12 adds the number n of connected mobile units in a certain unit time ΔT1 and the number m of synchronization lost mobile units in this unit time ΔT1, and adopts the obtained number as the number 1 of non-synchronous mobile units. At this time, the mobile units 21 for which the unit time ΔT1 has not yet elapsed since the setting of the communication channels and which are new connection targets by handover, may sometimes include a mobile unit which have been brought into synchronization in the uplink direction in a short time after the setting of the communication channels and afterwards, have lost synchronization in the uplink direction, so that the mobile units 21 for which the unit time ΔT1 has not yet elapsed since the setting of the communication channels and which are new connection targets by handover, may overlap the mobile units 21 which lost synchronization in the uplink direction, being detected by the synchronization management part 11 in the unit time ΔT1. In such a case, the number of overlapped mobile units 21 is subtracted from the number 1 of non-synchronous mobile units. The same thing can be applied to the mobile units 21 which are new connection targets by power-on and which are the mobile units 21 for which the communication channels have already been set but the unit time ΔT1 has not elapsed from the setting of the communication channels.

The transmission power control pattern generation part 12 generates the transmission power control patterns for the mobile units 21 which are new connection targets in the unit time ΔT1 or for the mobile units 21 which have lost synchronization in the uplink direction, by using the transmission power control commands sent from these mobile units 21, until the number 1 of non-synchronous mobile units exceeds the prescribed threshold value Nth1 in a certain unit time ΔT1.

Meanwhile, when the number 1 of non-synchronous mobile units exceeds the threshold value Nth1 in a certain unit time ΔT1, in the same way as the aforementioned first transmission power control method, for the same number of mobile units 21 as, or fewer mobile units 21 than, the threshold value Nth1, out of the mobile units 21 which become new connection targets in the unit time ΔT1 and the mobile units 21 which have lost synchronization in the uplink direction, the transmission power control pattern generation part 12 uses the transmission power control commands notified from these mobile units to generate the transmission power control patterns; and for any excess mobile unit 21 above the threshold value Nth1, the transmission power control pattern generation part 12 generates the transmission power control patterns so that the transmission power becomes a sufficiently low value.

Here, the priority order for establishing the synchronization is allocated to the mobile units 21 which become new connection targets and the mobile units 21 which have lost synchronization in the uplink direction, and the transmission power control pattern generation part 12 performs transmission power control by using the transmission power control commands sequentially from the mobile units 21 of higher priority order, so that the synchronization can be established promptly. In this example, the mobile units 21 which have lost synchronization in the uplink direction are set as the mobile units of the highest priority order, and the mobile units 21 which are new connection targets by handover are set as the mobile units 21 of the second highest priority order. Then, the mobile units 21 which are new connection targets by power-on are set as the mobile units 21 of the lowest priority order.

The mobile units which are new connection targets by power-on are not charged yet, so that a user can starts all over again from call transmission. Also, the mobile units 21 which are new connection targets by handover have a possibility of communicating with the base station equipment 1 which is a moving source. Then, the mobile units 21 which have lost synchronization in the uplink direction are different from the former two cases and need to be kept away from the risk of disconnecting the communication as much as possible. Accordingly, the above-described priority order is taken.

When the number 1 of non-synchronous mobile units exceeds the prescribed threshold value Nth1 in a certain unit time ΔT1, the transmission power control pattern generation part 12 generates the transmission power control patterns preferentially for the mobile units 21 which have lost synchronization in the uplink direction in this unit time ΔT1, by using the transmission power control commands, and when the number of mobile units 21 whose transmission power control patterns have been generated by using the transmission power control commands, is smaller than the threshold value Nth1, the transmission power control pattern generation part 12 generates the transmission power control patterns for the mobile units 21 which are new connection targets by handover, by using the transmission power control commands, and when the number of mobile units 21 generated by the transmission power control pattern by using the transmission power control commands is still smaller than the threshold value Nth1, finally generates the transmission power control pattern for the mobile units 21 which are new connection targets by power-on, by using the transmission power control commands. Then, when the number of mobile units 21 whose transmission power control patterns have been generated by using the transmission power control commands becomes the same as the threshold value Nth1, the transmission power control pattern generation part 12 generates the transmission power control patterns for the remaining mobile units 21 so that the transmission signal becomes a sufficiently small value.

By executing such a transmission power control, the increase of the transmission power is performed preferentially for the mobile units 21 of high priority order of establishing synchronization, and the transmission power to the mobile units 21 of low priority order of establishing the synchronization is limited. As a result, the mobile units 21 of high priority order of establishing the synchronization can be synchronized with the base station equipment 1 promptly, while suppressing a tremendous increase of the transmission power in the base station equipment 1.

The transmission power control pattern generation part 12 generates the transmission power control pattern for the mobile units 21 whose transmission power is set to be sufficiently small in a certain unit time ΔT1, in the same way as the aforementioned first transmission power control method, in the next unit time ΔT1, as per normal, by using the transmission power control commands notified from these mobile units 21. In addition, in the next unit time ΔT1, the transmission power control pattern generation part 12 adds the number of mobile units 21 set so that the transmission power becomes sufficiently small in the previous unit time ΔT1, to the number 1 of non-synchronous mobile units. Then, in the next unit time ΔT1 also, the transmission power control pattern generation part 12 performs similar processing as described above.

Note that as described above, when the mobile units 21 are not synchronized with the base station equipment 1 in the downlink direction, the transmission power control commands notifying the increase of the transmission power to the base station equipment 1 is continued to be outputted to the base station equipment 1. Therefore, ideally, the transmission power to the mobile units 21 which have lost synchronization in the downlink direction needs to be limited. However, on the side of the base station equipment 1, it is not easy to detect the mobile units 21 which have lost synchronization in the downlink direction, Meanwhile, the mobile units 21 which are not synchronized with the base station equipment 1 in the uplink direction have a possibility of losing synchronization in the downlink direction also. Accordingly, in this example, the detected mobile units 21 are not the mobile units 21 which have lost synchronization in the downlink direction of which detection is relatively difficult, but the mobile units 21 which have lost synchronization in the uplink direction of which detection is relatively easy. Note that when the mobile units 21 which have lost synchronization in the downlink direction can be easily detected in the base station equipment 1, the sum of such mobile units 21 may be used as the aforementioned number m of synchronization lost mobile units.

As described above, in the fifth transmission power control method according to this embodiment 1, the priority order of establishing the synchronization is provided for the mobile units 21 which are not synchronized with the base station equipment 1, according to the states of these mobile units 21. Therefore, proper transmission power control can be performed according to the states of the mobile units 21.

In addition as described above, if there is no limit in the transmission power, the base station equipment 1 increases the transmission power at a prescribed increasing rate, for the mobile units 21 which are not synchronized with the base station equipment 1. However, this increasing rate may be changed according to the aforementioned priority order. For example, the mobile units 21 which have lost synchronization in the uplink direction need to be synchronized with the base station equipment 1 promptly. Therefore, the increasing rate of the transmission power to the mobile units 21 which are new connection targets by handover, and the mobile units 21 which are new connection targets by power-on, may be limited so that the increasing rate of the transmission power to the mobile units 21 which have lost synchronization in the uplink direction is larger than this increasing rate.

In addition, in the fifth transmission power control method according to this embodiment, in the same way as the aforementioned first transmission power control method, by setting the transmission power at zero or an initial value, the transmission power to the mobile units 21 can be limited. However, when the transmission power control commands outputted from the mobile units 21 notifies a reduction of the transmission power, the transmission power is controlled by using this transmission power control commands. Then, when the increase of the transmission power is notified, by performing the transmission power control so as to maintain the present transmission power, ignoring the aforementioned transmission power control commands, it is possible to limit the transmission power to the mobile units 21 so as not to be increased. Such a limiting method of the transmission power can also be used in the first transmission power control method.

In addition, in the fifth transmission power control method according to this embodiment, the mobile units 21 for which the unit time ΔT1 has not yet elapsed since the setting of the communication channels and which are new connection targets by handover,; the mobile units 21 for which the unit time ΔT1 has not yet elapsed since the setting of the communication channels and which are new connection targets by power-on,; and the mobile units 21 whose communication channels have already been set but which have lost synchronization in the uplink direction, are detected as the mobile units1 which are not synchronized with the base station equipment 1. However, instead, it is also possible to detect the mobile units 21 for which the unit time ΔT1 has not yet elapsed since the setting of the communication channels and which are new connection targets by handover,; and the mobile units 21 for which the unit time ΔT1 has not yet elapsed since the setting of the communication channels and which are new connection targets by power-on,. In this case, the number m of lost synchronization mobile units counted up in the synchronization management part 11 is not used in the transmission power control pattern generation part 12, and the number n of connected mobile units is used as the number 1 of non-synchronous mobile units.

In addition, the mobile units 21 for which the unit time ΔT1 has not yet been elapsed since the setting of the communication channels, have a possibility of including the mobile units 21 which are actually synchronized with the base station equipment 1 in the downlink direction. Therefore, by using the information from the synchronization management part 11, it is possible to detect the mobile units 21 for which the unit time ΔT1 has not yet elapsed since the setting of the communication channels from the setting of the communication channels, and which are not synchronized with the base station 1 in the uplink direction, , and thereby, it is possible to some extent to exclude the mobile units21 actually synchronized with the base station equipment 1 in the downlink direction, from the non-synchronous mobile units 21 detected by the connected mobile unit monitor part 9. Accordingly, the mobile units 21 for which the unit time ΔT1 has not yet elapsed since the setting of the communication channels from the setting of the communication channels, which are not synchronized with the base station equipment 1 in the uplink direction and which are new connection targets by handover,; and the mobile units 21 for which the unit time ΔT1 has not yet elapsed since the setting of the communication channels from the setting of the communication channels, which are not synchronized with the base station equipment 1 in the uplink direction, and which are new connection targets by power-on,, may be detected as the mobile units 21 which are not synchronized with the base station equipment 1 in the fifth transmission power control method. In this case, the synchronization management part 11 detects a mobile unit 21 which is not synchronized with the base station equipment 1 in the uplink direction and outputs the information for identifying such a mobile unit 21 to the connected mobile unit monitor part 9. The connected mobile unit monitor part 9 refers to the information from the synchronization management part 11, then specifies the mobile units 21 which are new connection targets in the unit time ΔT1 and are not synchronized with the base station equipment 1 in the uplink direction, and outputs the sum of such mobile units 21 to the transmission power control pattern generation part 12. When the sum received from the connected mobile unit monitor part 9 is equal to or less than the threshold value Nth1, the transmission power control pattern generation part 12 generates the transmission power control pattern for the mobile units 21 which are connection targets in this unit time ΔT1, by using the transmission power control commands. Meanwhile, when the received sum is larger than the threshold value Nth1, the transmission power control pattern generation part 12 uses the transmission power control commands to generate the transmission power control patterns preferentially for the mobile units 21 which are new connection targets by handover in the unit time ΔT1 and which are not synchronized with the base station equipment 1 in the uplink direction. When the number of mobile units 21 whose transmission power control patterns have been generated using the transmission power control commands is yet smaller than the threshold value Nth1, then the transmission power control pattern generation part 12 uses the transmission power control commands to generate the transmission power control patterns for the mobile units 21 which are new targets by power-on and which are not synchronized with the base station equipment 1 in the uplink direction. Then, when the number of mobile units 21 whose transmission power control patterns have been generated using the transmission power control commands becomes the same as the threshold value Nth1, the transmission power control pattern generation part 12 generates the transmission power control patterns for the remaining mobile units 21 in such a manner that the transmission signal becomes a sufficiently small value.

In addition, in the aforementioned second transmission power control method also, by detecting the mobile units 21 which are new connection targets by handover and the mobile units 21 which are new connection targets by power-on, and by setting the communication channels preferentially for the former mobile units 21, the transmission power control can be properly performed according to the states of the mobile units 21.

Further, in the aforementioned third transmission power control method also, by detecting the mobile units 21 which are new connection targets by handover and the mobile units 21 which are new connection targets by power-on, and by setting the unit time ΔT0 allocated to the former mobile units 21 longer than the unit time ΔT0 allocated to the latter mobile units 21, the transmission power control can be properly performed according to the states of the mobile units 21.

### (Sixth transmission power control method)

In the aforementioned fifth transmission power control method, the priority order of establishing the synchronization is provided according to the states of the mobile units 21 which are not synchronized with the base station equipment 1. However, in this sixth transmission power control method, the priority order of establishing the synchronization is provided according to the kinds of the mobile units 21, and the transmission power control is performed so that the mobile units 21 of high priority order can establish the synchronization promptly. Explanation will be given hereunder, mainly on the difference from the first transmission power control method.

Generally, the mobile units 21 are classified according to the purpose of use, like those mobile units 21 used for emergency messages, or those mobile units 21 used by VIP (Very Important Person), and the priority order for calling the mobile units 21 is provided to each class. This priority order is used not only in reception processing for calling the mobile units 21 but also in the transmission power control.

The connected mobile unit monitor part 9 is notified of information regarding classification of the mobile units 21 from the base station control equipment 31. When the number n of connected mobile units is notified to the transmission power control pattern generation part 12, the connected mobile unit monitor part 9 outputs the information for identifying the classes of the mobile units 21 which are connection targets. In this example, as illustrated in FIG. 7, any one of the classes A2, B2, C2 is allocated to each one of the mobile units 21, and the priority order of establishing the synchronization becomes higher in an order of the classes A2, B2, C2.

The transmission power control pattern generation part 12 generates the transmission power control patterns for the mobile units 21 which are connection targets, by using the transmission power control commands notified from these mobile units 21, until the number n of connected mobile units exceeds the prescribed threshold value Nth1.

Meanwhile, when the number n of connected mobile units exceeds the prescribed threshold value Nth1 in a certain unit time ΔT1, in the same way as the aforementioned first transmission output control method, for the same number of mobile units 21 as, or fewer mobile units 21 than, the threshold value Nth1, out of the mobile units 21 which become new connection targets in the unit time ΔT1, the transmission power control pattern generation part 12 uses the transmission power control commands notified from these mobile units 21 to generate the transmission power control patterns; and for any excess mobile unit 21 above the threshold value Nth1, the transmission power control pattern generation part 12 generates the transmission power control patterns so that the transmission power to those mobile units 21 becomes sufficiently small values. At this time, the transmission power control is performed by using the transmission power control commands in an order from the mobile units 21 of higher priority order of establishing the synchronization. In this example, as described above, the priority order becomes higher in the order of the classes A2, BS, C2. Therefore, when the number n of connected mobile units exceeds the prescribed threshold value Nth1 in a certain unit time ΔT1, the transmission power control pattern generation part 12 uses the transmission power control commands preferentially for the mobile units 21 of the class A2, and when the number of mobile units 21 for which the transmission power control commands is used, is yet smaller than the threshold value Nth1, then the transmission power control pattern generation part 12 uses the transmission power control commands for the mobile units 21 of the class B2, and when the number of mobile units 21 for which the transmission power control commands is used, is yet smaller than the threshold value Nth1, finally the transmission power control pattern generation part 12 uses the transmission power control commands for the mobile units 21 of the class C2. Then, when the number of mobile units 21, for which the transmission power control commands is used, becomes the same as the threshold value Nth1, the transmission power control pattern generation part 12 generates the transmission power control patterns for the remaining mobile units 21 in such a manner that the transmission signal becomes a sufficiently small value.

As described above, in the sixth transmission power control method, the priority order of establishing the synchronization is provided, according to each classification of the mobile units. Therefore, the transmission power control can be properly performed according to each classification of the mobile units 21.

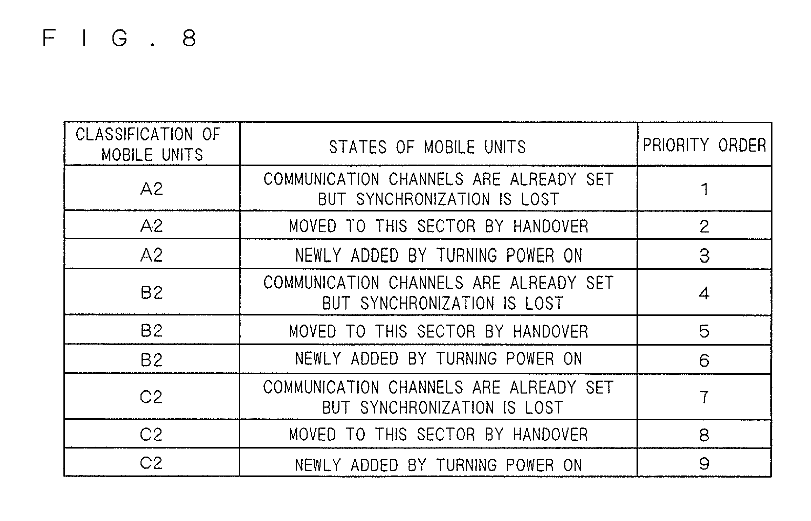

Note that in the aforementioned fifth transmission power control method also, the classification of the mobile units may be taken into consideration when the priority order of establishing the synchronization is decided. FIG. 8 is a view illustrating the priority order in this case.

In addition, in the aforementioned second transmission power control method also, the priority order of establishing the synchronization is provided according to the classification of the mobile units 21, and by setting the communication channel preferentially for the mobile units 21 of the class of high priority order, the transmission power control can be property performed according to the classification of the mobile units 21.

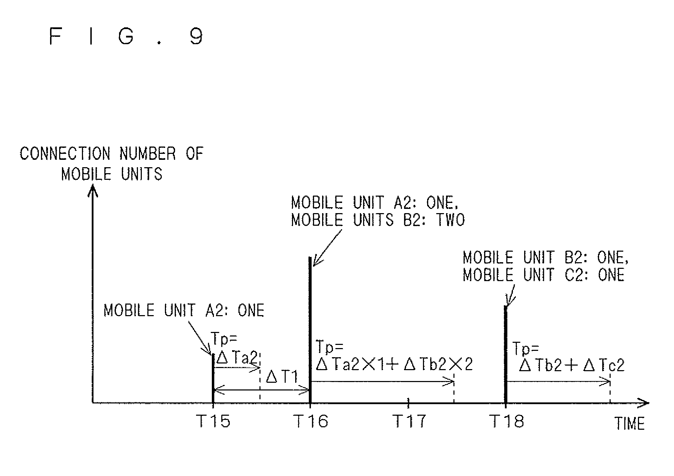

Further, in the aforementioned third transmission power control method also, the priority order of establishing the synchronization is provided according to the classification of the mobile units 21, and by setting the unit time ΔT0 used in deciding the suspension time Tp longer for the mobile units 21 of high priority order, the transmission power control can be properly performed according to the classification of the mobile units 21. FIG. 9 is a view illustrating this situation. Times T15 to T18 taken on the horizontal axis of FIG. 9 respectively show the time point when the unit time ΔT1 is ended. In addition, any one of the aforementioned classes A2, B2, C2 is allocated to each mobile unit 21, and unit times Ta2, Tb2, Tc2 are respectively allocated to the classes A2, B2, C3 as the unit time T0. The unit times Ta2, Tb2, Tc2 are set longer in this order.

As illustrated in FIG. 9, at time T15, when one mobile unit 21 of class A2 is a connection target in the unit time T0, the setting of the communication channels is not performed in a period from the time T15 to ΔTa2. Then, when one mobile unit 21 of class A2 and two mobile units 21 of class B2 are connection targets in the unit time T0 at time T16 after the elapse of ΔTa2, the setting of the communication channels is not performed in a period of (ΔTa2 x 1 + ΔTb2 x 2). Then, when one mobile unit 21 of class B2 and one mobile unit 21 of class C2 are connection targets in the unit time T0 at time point T18 after the elapse of (ΔTa2 x 1 + ΔTb2 x 2), the setting of the communication channels is not performed in the unit time of (ΔTb2 + ΔTc2) from time T18.

In addition, the data communicated by the mobile units 21 includes the one in which real-time performance is a required like voice data or moving image data, and the one in which the real-time performance is not required in a high-order layer of a network such as WEB browsing and E-mail, and ARQ (Automatic Repeat request) is activated, thereby requiring only best-effort type communication, so that classification by QoS (Quality of Service) is also effective. Particularly, classification in association with allowable delay time of the data is effective. For example, a mobile unit 21 which requires a delay time of 50ms or less is set as the highest priority order, and a mobile unit 21 which requires a delay time of 500ms or less is set as the next priority order, and a mobile unit 21 which requires only the best-effort type communication is set as the lowest priority order. Even under such a classification, the transmission power control can be properly performed according to the classification of the mobile units 21.

### (Seventh transmission power control method)

In the seventh transmission power control method, when the transmission power of the base station equipment 1 reaches a maximum allowable transmission power, by stopping the increase of the transmission power to the mobile units 21 which are not synchronized with the base station equipment 1 to suppress a tremendous increase of the transmission power of the base station equipment 1, excellent communication quality is maintained. Explanation will be given hereunder, mainly on the difference from the first transmission power control method.

The transmission power monitor part 10 acquires all transmission powers (called "total transmission power" hereafter) to the mobile units 21 in the base station equipment 1 to which this part belongs, , from the result of the transmission power control performed by the transmission power control part 4, repeatedly per every prescribed time, and outputs it to the transmission power control pattern generation part 12. The total transmission power may be a moving average value or may be an average value per unit time.

The transmission power control pattern generation part 12 compares the inputted total transmission power and the maximum allowable transmission power SMAX of the base station equipment 1. This maximum allowable transmission power SMAX is generally decided by the base station control equipment 31, and is notified to the base station equipment 1 from the base station control equipment 31.

When the total transmission power is smaller than the maximum allowable transmission power SMAX, the transmission power control pattern generation part 12 generates the transmission power control patterns for the mobile units 21 which are not synchronized with the base station equipment 1, notified from the connected mobile unit monitor part 9 and the synchronization management part 11, by using the transmission power control commands notified from these mobile units 21.

Here, "non-synchronous mobile units 21" in this seventh transmission power control method include the mobile units 21 for which the unit time ΔT1 has not yet elapsed since the setting of the communication channels and which are new connection targets by handover; and the mobile units 21 for which the unit time ΔT1 has not yet elapsed since the setting of the communication channels and which are new connection targets by power-on; and the mobile units 21 whose communication channels have already been set but which have lost synchronization in the uplink direction, as described in the fifth transmission power control method. Note that as is explained in the fifth transmission power control method, it may be possible to use the mobile units 21 for which the unit time ΔT1 has not yet elapsed since the setting of the communication channels and which are new connection targets by handover, and the mobile units 21 for which the unit time ΔT1 has not yet elapsed since the setting of the communication channels and which are new connection targets by power-on, as the "non-synchronous mobile units 21" in this example, or it may be also possible to use the mobile units 21 for which the unit time ΔT1 has not yet elapsed since the setting of the communication channels, which are not synchronized in the uplink direction, and which are new connection targets by handover, and the mobile units 21 for which the unit time ΔT1 has not yet elapsed since the setting of the communication channels, which are not synchronized in the uplink direction, and which are new connection targets by power-on, as "non-synchronous mobile units 21" of this example. The non-synchronous mobile units 21 can be detected in the same way as the fifth transmission power control method.

Meanwhile, when the total transmission power coincides with the maximum allowable transmission power SMAX, the transmission power control pattern generation part 12 generates the transmission power control pattern for each non-synchronous mobile unit 21 at this point so that the transmission power at that time is maintained, and thereafter, when the total transmission power becomes smaller than the maximum allowable transmission power SMAX, the transmission power control pattern generation part 12 generates the transmission power control pattern so as to continue a state in which the transmission power is constantly maintained for a constant time T21. The constant time T21 is set at a time normally required from the time when the base station equipment 1 sets the communication channels for the mobile units 21 which are connection targets, until the time when the synchronization is established between these mobile units 21 and the base station equipment 1 in the downlink direction. Thereafter, when the constant time T21 is elapsed, the transmission power control pattern generation part 111 similarly operates according to a comparison result between the total transmission power and the maximum allowable transmission power SMAX.

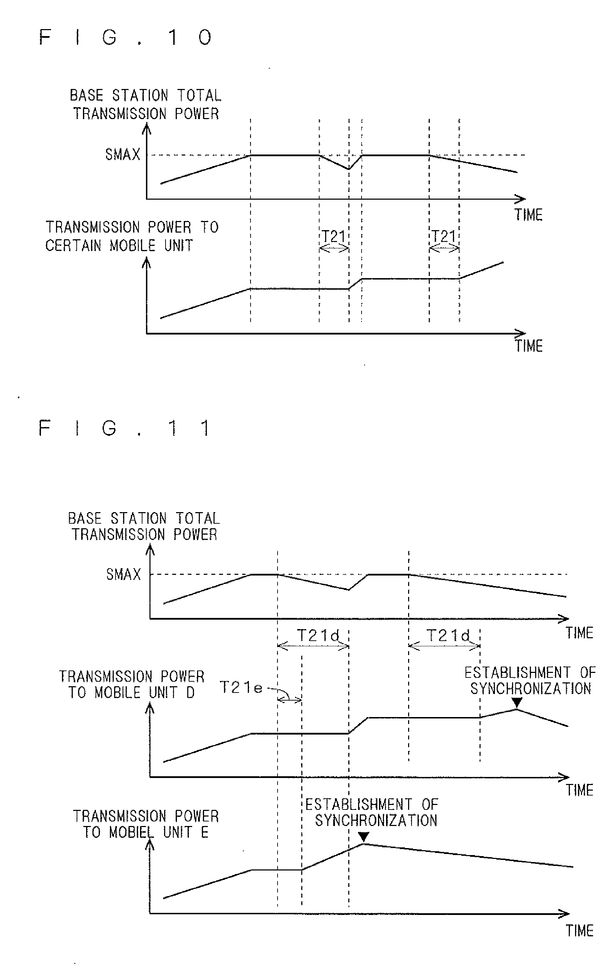

FIG. 10 is a view illustrating the seventh transmission power control method according to this embodiment 1. As illustrated in FIG. 10, when the total transmission power in the base station equipment 1 reaches the maximum allowable transmission power SMAX, the increase of the transmission power to a certain non-synchronous mobile unit 21 is stopped, and the value at that time is maintained. Then, when the total transmission power becomes smaller than the maximum allowable transmission power SMAX with the reason in which the synchronization is established between other mobile units 21 and the base station equipment 1, or the like, the state of maintaining a specific value is continued in the constant time T21, and thereafter when the constant time T2 is elapsed, the transmission power to this certain mobile unit 21 starts increasing again in a case where the synchronization is not established between this certain mobile unit 21 and the base station equipment 1.

As described above, in the seventh transmission power control method according to this embodiment 1, when the total transmission power reaches the maximum allowable transmission power SMAX of the base station equipment 1, the increase of the transmission power to the non-synchronous mobile units 21 is stopped.

Here, generally, the mobile units 21 can be synchronized with the base station equipment 1 in some cases, by change of a propagation environment, even if not increasing the transmission power to the mobile units 21, like a case in which a vehicle shielding the base station equipment 1 moves from the front of the moving units 21. Accordingly, there is no necessity for always increasing the transmission power to the non-synchronous mobile units 21.

As is seen in this example, when the total transmission power of the base station equipment 1 reaches the maximum allowable transmission power SMAX, by stopping the increase of the transmission power to the non-synchronous mobile units 21, a tremendous increase of the transmission power in the base station equipment 1 can be avoided, without increasing the time so much required for actual synchronization between the mobile units 21 and the base station equipment 1. As a result, excellent communication quality can be maintained between the base station equipment 1 and the mobile units 21.

Note that in this seventh transmission power control method, in the same way as the aforementioned sixth transmission power control method, the transmission power control can be properly performed according to the classification of the mobile units 21, by providing the priority order of establishing the synchronization according to the classification of the mobile units 21, and setting the constant time T21 shorter for the mobile units 21 of higher priority order. FIG. 11 is a view illustrating this situation. In the example of FIG. 11, any one of the classes D and E is allocated to each one of the mobile units 21, and the priority order of establishing the synchronization is set higher for the mobile units 21 of class E than the mobile units 21 of class D. In addition, the constant time T21 for the mobile units 21 of the class D is set as "constant time T21d", and the constant time T21 for the mobile units 21 of the class E is set as "constant time T21e". As illustrated in FIG. 11, with respect to the constant time T21 after the total transmission power of the base station equipment 1 becomes smaller than the maximum allowable transmission power SMAX, the constant time T21 for the mobile units 21 of the class E is set shorter than that for the mobile units 21 of the class D. Accordingly, the mobile units 21 of the class E are easily synchronized with the base station equipment 1 earlier.

### (Eighth transmission power control method)

In the eighth transmission power control method, the transmission power to the mobile units 21 which are not synchronized with the base station equipment 1 is tremendously increased, and when the transmission power becomes larger than a threshold value, by stopping the increase of this transmission power to suppress the tremendous increase of the transmission power of the base station equipment 1, which ensures the maintenance of excellent communication quality. Detailed explanation will be given hereunder. Note that the non-synchronous mobile units 21 are the same as those in the seventh transmission power control method, and a detection method thereof is also the same as that of the seventh transmission power control method. Explanation will be given hereunder, mainly on the difference from the seventh transmission power control method.

From the result of the transmission power control in the transmission power control part 4, the transmission power monitor part 10 detects a mobile unit 21 whose transmission power from the base station equipment 1 is tremendously increased to be larger than a threshold value Wth, and outputs the information for identifying this mobile unit 21 to the transmission power control pattern generation part 12. At this time, the transmission power control pattern generation part 12 generates the transmission power control pattern for each one of the mobile units 21 which are connection targets, by using the transmission power control commands notified from these mobile units 21, Namely, in accordance with the notification from the mobile units 21, the transmission power control pattern generation part 12 and the transmission power control part 4 control the transmission power to these mobile units 21. When the increasing rate of the transmission power is larger than the prescribed threshold value Rth, the transmission power monitor part 10 determines that the transmission power is tremendously increased. Further, in the same way as the aforementioned seventh transmission power control method, the transmission power monitor part 10 acquires the total transmission power of the base station equipment 1 repeatedly per every prescribed time, from the result of the transmission power control by the transmission power control part 4, and outputs it to the transmission power control pattern generation part 12.

The transmission power control pattern generation part 12 specifies non-synchronous mobile units 21 out of the mobile units 21 notified from the transmission power monitor part 10. Then, the transmission power control pattern generation part 12 generates the transmission power control patterns for the specified mobile units 21, namely the mobile units 21 which are not synchronized with the base station equipment 1 and whose transmission power from the base station equipment 1 is tremendously increased to be larger than the threshold value Wth, so that the increase of the transmission power to these mobile units 21 is stopped and the value at that time is maintained for a constant time T31 without using the transmission power control commands notified from these mobile units 21. The transmission power control pattern generation part 12 generates the transmission power control patterns for the other mobile units 21 by using the transmission power control commands from the mobile units 21 as per normal. This constant time T31 is set at a time normally required, for example, from the time when the base station equipment 1 sets the communication channels for the mobile units 21 which are connection targets, until the time when the mobile units 21 can be synchronized with the base station equipment 1 in the downlink direction.

Thereafter, after the elapse of the constant time T31, when the total transmission power of the base station equipment 1 has a margin to the maximum allowable transmission power SMAX, the transmission power control pattern generation part 12 generates the transmission power control patterns for the mobile units 21 whose transmission power has been stopped to increase, by using the transmission power control commands notified from these mobile units 21. At this time, when the transmission power control commands from these mobile units 21 still notify the increase of the transmission power, it is preferable to set the increasing rate of the transmission power to these mobile units 21 smaller than the increasing rate before the increase is stopped. For example, if the increasing rate before the increase of the transmission power is stopped is increased by 1.25 times in a unit time of 100 ms and the number of non-synchronous mobile units immediately after the elapse of the constant time T31 is n, the increasing rate is expressed by (1 + 0.25/n) times in a unit time of 100 ms.

Meanwhile, after the elapse of the constant time T31, when the total transmission power of the base station equipment 1 has no margin to the maximum allowable transmission power SMAX, the transmission power control pattern generation part 12 generates the transmission power control patterns for the mobile units 21 whose transmission power has been stopped to increase, so that the stop of increase of the transmission power is maintained and the transmission power becomes a fixed value when the transmission power control commands notified from these mobile units 21 shows the increase of the transmission power, and thereafter when this transmission power control command shows a decrease of the transmission power, the transmission power control pattern generation part 12 generates the transmission power control patterns for these mobile units 21 by using this transmission power control commands. Also, after the elapse of the constant time T31, when the total transmission power of the base station equipment 1 has no margin to the maximum allowable transmission power SMAX and the transmission power control commands from the mobile units 21 whose transmission power has been stopped to increase, shows the decrease of the transmission power, the transmission power control pattern generation part 12 generates the transmission power control patterns for these mobile units 21, by using this transmission power control commands.

Whether or not the total transmission power of the base station equipment 1 has a margin to the maximum allowable transmission power SMAX can be determined by providing the prescribed threshold value Sth smaller than the maximum allowable transmission power SMAX and determining whether or not the transmission power is larger than this threshold value Sth.

Note that after the elapse of the constant time T31, instead of determining whether or not the total transmission power of the base station equipment 1 has a margin to the maximum allowable transmission power SMAX, it may be possible to determine whether or not the number of mobile units equipments 21 which are communicated with the base station equipment 1 is smaller than a prescribed number.

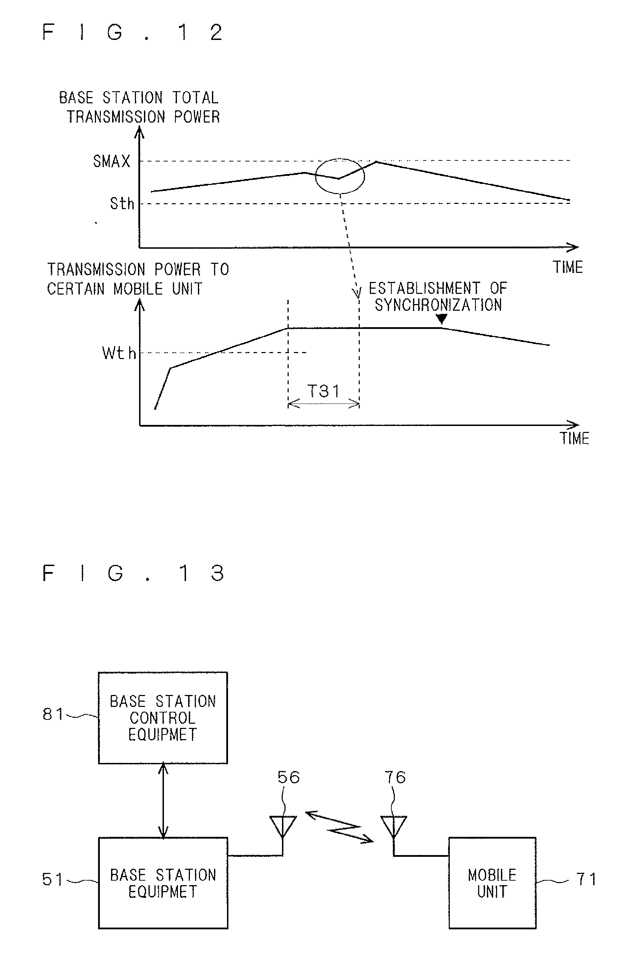

FIG. 12 is a view illustrating the eighth transmission power control method according to this embodiment 1. As illustrated in FIG. 12, in consideration of the interference to peripheral base stations, the transmission to a certain mobile units 21 is started with a sufficiently low transmission power, and when the transmission power to this mobile units 21 reaches an initial power value, the increasing rate of the transmission power is lowered and the transmission power is relatively slowly increased. Then, when it is determined that the transmission power of this mobile unit 21 is larger than a threshold value Wth and is tremendously increased, the increase of the transmission power to this mobile unit 21 is stopped and the value at that time is maintained for the constant time T31. In the example of FIG. 12, after the elapse of the constant time T31, the total transmission power of the base station equipment 1 is larger than the threshold value Sth and this total transmission power has no margin to the maximum allowable transmission power SMAX, and therefore the transmission power to this mobile unit 21 is maintained at a value when the increase of the transmission power is stopped. Thereafter, when synchronized with the base station equipment 1 in the downlink direction, this mobile unit 21 outputs the transmission power control commands notifying a decrease of the transmission power, and therefore the transmission power to this mobile unit 21 is gradually decreased.

As described above, in the eighth transmission power control method according to this embodiment 1, the transmission power to the mobile units 21 which are not synchronized with the base station equipment 1 is tremendously increased, and when this transmission power becomes larger than the threshold value, the increase of this transmission power is stopped. Accordingly, the transmission power in the base station equipment 1 can be prevented from becoming a tremendously large value. As a result, excellent communication quality can be maintained between the base station equipment 1 and the mobile units 21.

### Embodiment 2

FIG. 13 is a block diagram illustrating a structure of a wireless communication system according to an embodiment 2. The wireless communication system according to this embodiment 2 is the wireless communication system of an OFDMA (Orthogonal Frequency Division Multiplexing Access) system or an SC-FDMA (Single Carrier-Frequency Division Multiplexing Access) system.

In the aforementioned embodiment 1, explanation has been given for the transmission power control in the wireless communication system of WCDMA system. However, the transmission power control can also be performed in the same concept, in the wireless communication system of OFDMA system or SC-FDMA system. Considering that Reuse = 1 or more, the transmission power control with good accuracy is required, to reduce the interference to other base station equipment or other sector as much as possible. Therefore, the transmission power control similar to the embodiment 1 is effective. Particularly, in the uplink direction, there is an frequency offset between mobile units, which prevents the signal from a plurality of mobile units from being orthogonal completely, and the tremendous increase of the transmission power from the mobile units which are not synchronized in the uplink direction allows the interference to be tremendously increased when there exist a plurality of mobile units at the same time, thus making it difficult to establish a sufficient synchronization. The wireless communication system according to this embodiment 2 will be explained in detail hereunder.

As illustrated in FIG. 13, the wireless communication system according to this embodiment 2 includes base station equipment 51, mobile units 71, and base station control equipment 81. The base station control equipment 81 performs wire communication with the base station equipment 51, and mainly controls the base station equipment 81. The base station equipment 51 can perform wireless communication with a plurality of movable equipments 71. FIG. 13 shows one of the plurality of mobile units 71.

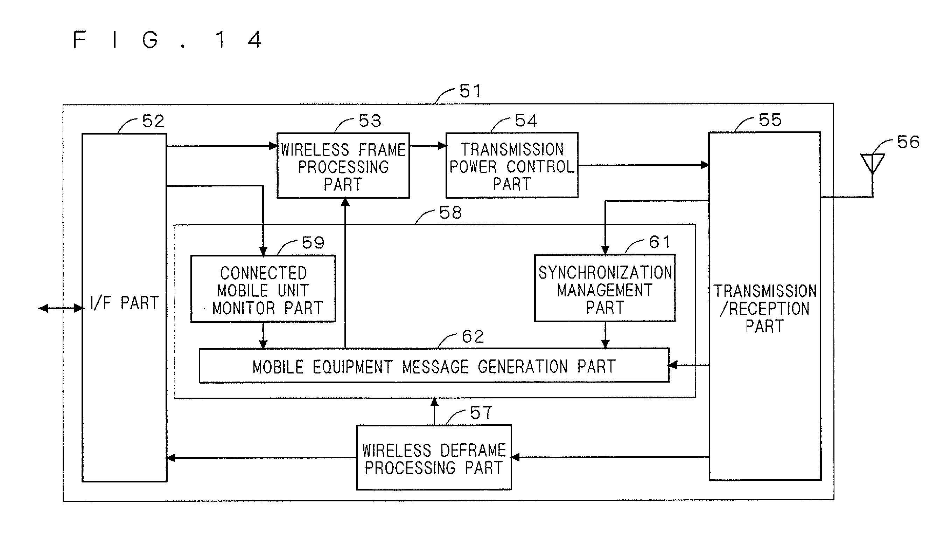

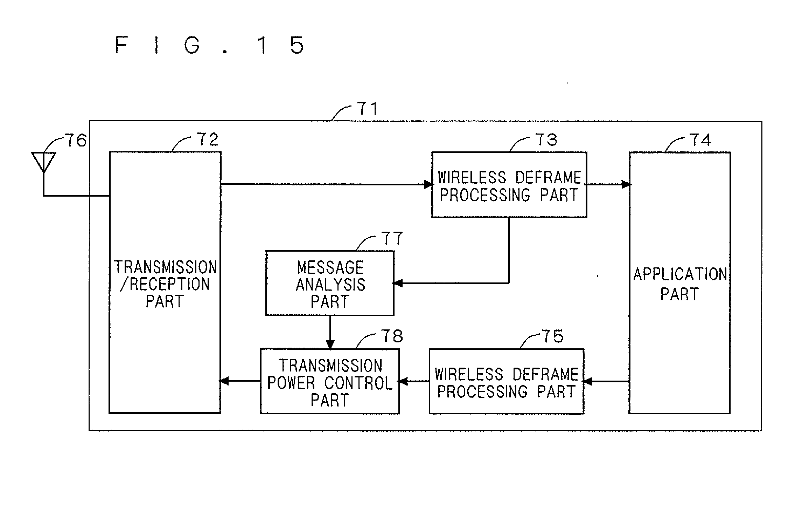

FIG. 14 and FIG. 15 are block diagrams illustrating the structure of the base station equipment 51 and a mobile unit 71 respectively. As illustrated in FIG. 14, the base station equipment 1 is connected to the base station control equipment 81 by I/F part 52. A digital signal from the base station control equipment 81 is received by the I/F part 52 and is inputted in a wireless frame processing part 53. Based on the signal from the base station control equipment 81, the wire frame processing part 53 generates a transmission signal of a digital form for the mobile units 21 which are connection targets, and executes CRC encoding, error-correction encoding to this transmission signal and mapping to a wire frame, etc, to output this transmission signal to a transmission power control part 54. A message regarding the transmission power control in a mobile unit 71 (called "transmission power control message" hereafter) outputted from a mobile unit message generation part 62 as will be described later is included in the transmission signal generated in the wireless frame processing part 53.

The transmission power control part 54 performs prescribed transmission power control on the inputted transmission signal, and output the signal to a transmission/reception part 55. The transmission/reception part 55 converts the inputted transmission signal to an analogue form. Then, the transmission/reception part 55 performs modulation processing to the transmission signal of the analogue form, and thereafter this transmission signal is frequency-converted up to a transmission frequency, which is then power-amplified and outputted to a plurality of mobile units 71 through an antenna 56.

The signal received by the antenna 56 is frequency-converted to a prescribed low frequency in the transmission/reception part 55, which is then subjected to demodulation processing and converted to the signal of the digital form, and inputted in a wireless deframe processing part 57. The wireless deframe processing part 57 extracts a necessary signal from the wireless frame in the inputted reception signal, and executes the error-correction decoding and CRC decoding, etc, to this signal, and outputs it to the I/F part 52 or a control part 58 as will be described later. The I/F part 52 outputs the inputted signal to the base station control equipment 81.

The base station equipment 51 further has the control part 58. The control part 58 includes a connected mobile unit monitor part 59, a synchronization management part 61, and a mobile unit message generation part 62. The connected mobile unit monitor part 59 acquires the information regarding a mobile unit 71 connected to the base station equipment 51. The synchronization management part 61 measures a quality of the known data sequence from the result of the demodulation processing in the transmission/reception part 55, and from this quality measurement result, grasps a synchronization state between the base station equipment 51 and the mobile units 71. In the synchronization management part 61, RSSI measurement, SINR measurement, BLER measurement, and BER measurement, etc, are performed. The mobile unit message generation part 62 generates a transmission power control message used in the transmission power control and outputs it to the wireless frame processing part 53.

In the mobile unit 71, the signal received by an antenna 76 is frequency-converted to a prescribed low frequency in a transmission/reception part 72, thereafter subjected to demodulation processing, converted to the digital form, and inputted in a wireless deframe processing part 73. The wireless deframe processing part 73 extracts the necessary signal from the wireless frame in the inputted reception signal, then executes the error-correction decoding and CRC decoding, etc, to this signal, and outputs it to an application part 74 or a message analysis part 77 as will be described later. The application part 74 executes prescribed processing, based on the inputted reception signal. For example, image display on a display part not shown is performed, or voice is outputted from a speaker not shown.

Meanwhile, the transmission signal generated in the application part 74 is inputted in the wireless frame processing part 75. The wireless frame processing part 75 executes the CRC encoding, error-correction encoding to the inputted transmission signal and mapping to the wireless frame, and outputs this transmission signal to a transmission power control part 78. The transmission power control part 78 performs transmission power control to the inputted transmission signal, and outputs this transmission signal to the transmission/reception part 72. The transmission/reception part 72 converts the inputted transmission signal to the analogue form, then performs modulation processing to this transmission signal of the analogue form, then applies frequency conversion to this transmission signal up to the transmission frequency, power-amplifies it and outputs it to the base station equipment 1 through the antenna 76.

The mobile unit 71 further has the message analysis part 77. The message analysis part 77 analyzes a transmission power control message from the base station equipment 51, inputted through the wireless deframe processing part 73, and generates control information to output to the transmission power control part 78. The transmission power control part 78 performs transmission power control to the inputted transmission signal, based on the control information from the message analysis part 77.

Next, a transmission power control method in the wireless communication system according to this embodiment 2 will be explained in detail.

### (First transmission power control method)

In a first transmission power control method, by changing the increasing rate of the transmission power in the mobile unit 71 to the base station equipment 51 according to the number of mobile units 71 which are not synchronized with the base station equipment 1, a tremendous increase of the transmission power in the mobile units 71 to the base station equipment 51 can be suppressed, which ensures the maintenance of excellent communication quality. Detailed explanation will be given hereunder.

Based on the communication channel setting information notified from a base station control equipment 81 through the I/F part 52, the connected mobile unit monitor part 59 acquires the total number of mobile units 71 which are new connection targets in the same sector in the unit time ΔT2 (hereinafter called "the number N11 of connected mobile units per unit time"), and outputs this number to the mobile unit message generation part 62. The unit time ΔT2 is set to be the time normally required from the setting of the communication channels for the mobile units 71 which are connection targets, by the base station equipment 51, until the synchronization between the base station equipment 51 and the mobile units 71 is established in the uplink direction. Accordingly, the number N11 of connected mobile units per unit time is the number of mobile units 71 which are not synchronized with the base station equipment 51 in the uplink direction.

When the number N11 of connected mobile units per unit time in a certain unit time ΔT2 is larger than a prescribed threshold value Nth11, the mobile unit message generation part 62 generates the message showing the number N11 of connected mobile units per unit time as the transmission power control message, and outputs it to the wireless frame processing part 53. Thereafter, this transmission power control message is inputted in each one of the mobile units 71 which are connection targets, from the antenna 56. Note that the transmission of the transmission power control message is performed per every unit time ΔT2.

When the message analysis part 77 of the mobile unit 71 receives the transmission power control message from the base station equipment 51 inputted through the wireless deframe processing part 73, it analyzes this transmission power control message, and acquires the number N11 of connected mobile units per unit time included in this message. Then, the message analysis part 77 generates the control information notifying of increasing the increasing rate of the transmission power in the mobile units 71, to which this part belongs, to the base station equipment 51, by (1/N11) times of a reference increasing rate as will be described later and then outputs it to the transmission power control part 78.

In a state in which the mobile units 71 are not synchronized with the base station equipment 51 in the uplink direction, the transmission power control part 78 performs transmission power control on the inputted transmission signal, so that the transmission signal to the base station equipment 51 is increased at a prescribed increasing rate, before the control information is notified from the message analysis part 77. This prescribed increasing rate is the reference increasing rate. When the control information is received from the message analysis part 77, the transmission power control part 78 performs transmission power control on the inputted transmission signal so that the increasing rate of the transmission power to the base station equipment 51 is (1/N11) times the reference increasing rate.

Thereafter, when the synchronization is established between the mobile units 21 to which the transmission power control part 78 belongs, and the base station equipment 51, the transmission power control part 78 performs transmission power control based on the transmission power control commands included in the transmission power control message that is described later.

When confirming the synchronization with a certain mobile unit 71 in the uplink direction from the information outputted by the synchronization management part 61, the mobile unit message generation part 62 of the base station equipment 51 generates the transmission power control commands regarding this mobile unit 71 based on the quality measurement result of the known data sequence in the synchronization management part 61. For example, when the quality of the known data sequence does not satisfy a prescribed reference, the mobile unit message generation part 62 generates the transmission power control commands notifying the increase of the transmission power to the base station equipment 51, and when this reference is satisfied, generates the transmission power control commands notifying the decrease of the transmission power to the base station equipment 51. Then, the mobile unit message generation part 62 does not provide the information of the number N11 of connected mobile units per unit time, but provides the transmission power commands to the transmission power control message regarding this mobile unit 71. Therefore, when the synchronization is established with the mobile unit 21 on the side of the base station equipment 51, the transmission power control message including the transmission power control commands is outputted to this mobile unit 71 from the base station equipment 51. When the transmission power control message including the transmission power control commands is received, the message analysis part 77 of the mobile unit 71 outputs this transmission power control commands to the transmission power control part 78, as the control information. The transmission power control part 78 performs transmission power control based on the inputted transmission power control commands.

As described above, in the first transmission power control method according to this embodiment 2, the increasing rate of the transmission power in the mobile unit 71 to the base station equipment 51 is changed according to the number of mobile units 71 which are not synchronized with the base station equipment 1. Therefore, a tremendous increase of the transmission power in the mobile unit 71 to the base station equipment 51 can be suppressed. Accordingly, the maintenance of excellent communication quality can be ensured.

### (Second transmission power control method)

In the second transmission power control method, the transmission power in the mobile unit 71 to the base station equipment 51 is changed, in consideration of the mobile units 71 which have lost synchronization with the base station equipment 51, as the mobile units 71 which are not synchronized with the base station equipment 51. Explanation will be given hereunder, mainly on the difference from the first transmission power control method.

In the same way as the aforementioned first transmission power control method, the connected mobile unit monitor part 59 acquires the number N11 of connected mobile units per unit time, and outputs this number to the mobile unit message generation part 62, together with the information identifying the mobile units 71 which are new connection targets in the unit time ΔT2.

The synchronization management part 61 performs quality measurement of the known data sequence from the result of the demodulation processing in the transmission/reception part 55, and from this quality measurement result, acquires the total number of mobile units 71 which have lost synchronization with the base station equipment 51 in the uplink direction in the unit time ΔT2 (called "the number M11 of the synchronization lost mobile units in the uplink direction per unit time" hereafter), and outputs this number to the mobile unit message generation part 62, together with the information identifying this mobile units 21.

The mobile unit message generation part 62 adds the number N11 of connected mobile units per unit time notified from the connected mobile unit monitor part 59 and the number M11 of synchronization lost mobile units in the uplink direction per unit time notified from the synchronization management part 61, and adapts the gained number as the number L11 of non-synchronous mobile units per unit time. At this time, even when the unit time ΔT2 has not elapsed from the setting of the communication channels, there exist the mobile units 71 which have established the synchronization in the uplink direction in a short time after the setting of the communication channels but which have lost synchronization in the uplink direction in a short time thereafter. Therefore, when the mobile units 21 which have lost synchronization in the uplink direction detected by the synchronization management part 61, and the mobile units 21 which are new connection targets detected by the connected mobile unit monitor part 59, overlap each other, the number of overlapping units is subtracted from the number L11 of non-synchronous mobile units per unit time. Thereafter, the mobile unit message generation part 62 generates a message showing the number L11 of non-synchronous mobile units per unit time as the transmission power control message, and outputs it to the wireless frame processing part 53. Thus, the transmission power control message is inputted in each one of the mobile units 71 which are connection targets. Note that the transmission of the transmission power control message to the mobile units 71 is performed per every unit time ΔT2.

When the transmission power control message is received from the base station equipment 51 inputted through the wireless deframe processing part 73, the message analysis part 77 of the mobile unit 71 analyzes this transmission power control message and acquires the number L11 of non-synchronous mobile units per unit time included in this message. Then, the message analysis part 77 generates the control information notifying of increasing the increasing rate of the transmission power in the mobile unit 71 to the base station equipment 51 by (1/L11)times the reference increasing rate, and outputs it to the transmission power control part 78.

When the control information is received from the message analysis part 77, the transmission power control part 78 controls the transmission power, so that the increasing rate of the transmission power to the base station equipment 51 is (1/L11) times the reference increasing rate, even though it has until then controlled an amplifying rate of the transmission power to correspond to a reference amplifying rate.

Thereafter, in the same way as the first transmission power control method, when the synchronization in the uplink direction is established between the mobile units 21, to which the transmission power control part 78 belongs, and the base station equipment 51, the transmission power control part 78 performs transmission power control based on the transmission power control commands included in the transmission power control message.

As described above, in the second transmission power control method according to this embodiment 2, the increase of the transmission power in the mobile unit 71 to the base station equipment 51 is changed, according to the number of mobile units 71 which are not synchronized with the base station equipment 1. Therefore, a tremendous increase of the transmission power in the mobile units 71 to the base station equipment 51 can be suppressed. Therefore, the maintenance of excellent communication quality can be ensured.

Note that in the aforementioned first and second transmission power control methods, the transmission power control message may be notified by a common channel such as a broadcast channel, used in common by each one of the mobile units 71, or may be notified by a dedicated channel prepared individually for each mobile unit 71.

In addition, in the aforementioned first and second transmission power control methods, the number N11 of connected mobile units per unit time or the number L11 of non-synchronous mobile units per unit time is outputted to the mobile units 71 from the base station equipment 51 so that a final amplifying rate of the transmission power is decided by the mobile units 71. However, when the transmission power control message is notified by the dedicated channel, it is effective to decide the final amplifying rate of the transmission power of the mobile units 71 on the side of the base station equipment 51 and output only the information notifying the amount of the increase or decrease of the transmission power to the mobile units 71 as the transmission power control message. In this case, the message analysis part 77 extracts the information notifying the amount of the increase or the decrease of the transmission power from the transmission power control message, and outputs it to the transmission power control part 78.

In addition, in the aforementioned first transmission power control method, the number N11 of connected mobile units per unit time and a prescribed threshold value Nth11 are compared on the side of the base station equipment 1. However, it may be also possible to output a transmission output control message showing the number N11 of connected mobile units per unit time to the mobile units 71 every time it is acquired, and compare the number N11 of connected mobile units per unit time and the threshold value Nth11 on the side of the mobile unit 71.

In addition, in the first and second transmission power control methods according to the embodiment 2, like the fourth transmission power control method according to the aforementioned embodiment 1, the tremendous increase of the transmission power of the mobile units 21 may be suppressed by classifying the mobile units 21 which are control objects, into a plurality of groups and by differentiating the time zone in which the transmission power control is performed based on the transmission power control commands, among these groups. For example, in the first transmission power control method according to the embodiment 2, the mobile units 21 which are connection objects in a certain unit time ΔT2 are classified into a plurality of groups A to C, and the transmission power control is performed on the mobile units 21 in the group A, first based on the transmission power control commands from the base station equipment 1, and the transmission power control is performed on the mobile units 21 in the other groups B and C, so that the increasing rate of the transmission power to the base station equipment 51 becomes (1/N11) times the reference increasing rate. Next, the transmission power control is performed on the mobile units 21 in the group B based on the transmission power control commands from the base station equipment 1, and the transmission power control is performed on the mobile units 21 in the other groups A and C, so that the increasing rate of the transmission power to the base station equipment 51 becomes (1/N11) times the reference increasing rate, and finally the transmission power control is performed on the mobile units 21 in the group C based on the transmission power control commands from the base station equipment 1, and the transmission power control is performed on the mobile units 21 in the other groups A and B, so that the increasing rate of the transmission power to the base station equipment 51 becomes (1/N11) times the reference increasing rate.

Further, in the first and second transmission power control methods according to the embodiment 2, like the sixth transmission power control method according to the aforementioned embodiment 1, the transmission power control may be performed by providing the priority order of establishing the synchronization according to the classification of the mobile units 21 and considering this priority order. For example, the increasing rate of the transmission power may be set smaller than the reference increasing rate, only for the mobile units 71 in a class of the lowest priority order. Also, the decrease of the increasing rate of the transmission power from the reference increasing rate may be set smaller, for the mobile units 71 in a class of higher priority order. For example, in the first transmission power control method according to the embodiment 2, the mobile units 71 are classified into classes A to C2, and when the priority order of establishing the synchronization is higher in an order of classes A2 to C2, the transmission power control is performed on the mobile units 71 in the class A2 so that the increasing rate of the transmission power becomes (1/N11) times the reference increasing rate, and the transmission power control is performed on the mobile units 71 in the class B2 so that the increasing rate of the transmission power becomes (1/(N11 + 1)) times the reference increasing rate, and the transmission power control is performed on the mobile units 71 in the class C2 so that the increasing rate of the transmission power becomes (1/(N11 + 2)) times the reference increasing rate. Also, the transmission power may be set to be zero, for the mobile units 21 in the class of the lowest priority order.

Note that when the transmission power is controlled based on the priority order of establishing the synchronization provided according to the classification, in consideration of the class allocated to the mobile unit 71 which is a control object, and the priority order of this class, the transmission power control message to this mobile unit 71 may be generated on the side of the base station equipment 51, or by determining its own class on the side of the mobile unit 71, the transmission power control may be performed autonomously in consideration of the priority order allocated to this class.

This invention has been explained in detail. However, the above-described explanation is shown as examples in all aspects, and the present invention is not limited thereto. It appears that numerous modified examples not exemplified can be assumed without departing from the scope of this invention.

## Claims

1. A wireless communication device, which is a wireless communication device (1) capable of performing wireless communication with a plurality of opposite communication devices (21), comprising:
a detection part (9, 11) that detects said opposite communication devices which are not synchronized with said wireless communication device and
a control part (4, 12) that controls transmission power to said opposite communication devices,
wherein said control part limits the transmission power to said opposite communication devices which are not synchronized with said wireless communication device.

2. The wireless communication device according to claim 1, wherein
said opposite communication devices which are not synchronized with said wireless communication device include said opposite communication devices which have lost synchronization with said wireless communication device.

3. The wireless communication device according to claim 1, wherein
when the number of said opposite communication devices which are not synchronized with said wireless communication device exceeds a prescribed threshold value, said control part limits the transmission power to any excess one of said opposite communication devices, which are not synchronized with said wireless communication device, above the threshold value.

4. The wireless communication device according to claim 1, wherein
when total transmission power of said wireless communication device reaches maximum allowable transmission power, said control part stops an increase of the transmission power to said opposite communication devices which are not synchronized with said wireless communication device.

5. The wireless communication device according to claim 1, wherein
when said control part controls the transmission power to said opposite communication devices which are not synchronized with said wireless communication device according to a notification from said opposite communication devices, if an increasing rate of this transmission power becomes larger than a first threshold value and this transmission power becomes larger than a second threshold value, said control part stops the increase of this transmission power.

6. A wireless communication device, which is a wireless communication device (1) capable of performing wireless communication with a plurality of opposite communication devices (21), comprising:
a detection part (9, 11) that detects said opposite communication devices which are not synchronized with said wireless communication device; and
a control part (4, 12) that controls transmission power to said opposite communication devices,
wherein when a plurality of said opposite communication devices which are not synchronized with said wireless communication device are detected by said detection part, said control part increases the transmission power to said plurality of said opposite communication device which are not synchronized with said wireless communication device in different time zones from one another among said plurality of said opposite communication devices.

7. A wireless communication device, which is a wireless communication device (1) capable of performing wireless communication with a plurality of opposite communication devices (21), comprising:
a detection part (9) that detects said opposite communication devices which are new connection targets;
a setting part (3) that sets communication channels for said opposite communication devices which are new connection targets; and
a control part (12) that controls the setting of said communication channels in said setting part,
wherein when a plurality of said opposite communication devices which are new connection targets are detected by said detection part, said control part controls said setting part to partially delay the setting of the communication channels for said plurality of said opposite communication devices which are new connection targets.

8. The wireless communication device according to claim 7, wherein
when the number of said opposite communication devices which are new connection targets exceeds a prescribed threshold value, said control part delays the setting of the communication channels for any excess one of said opposite communication devices, which are new connection targets, above the threshold value.

9. A wireless communication device, which is a wireless communication device (1) capable of performing wireless communication with a plurality of opposite communication devices (21), comprising:
a detection part (9) that detects said opposite communication devices which are new connection targets;
a setting part (3) that sets communication channels for said opposite communication devices which are new connection targets; and
a control part (12) that controls the setting of said communication channels in said setting part,
wherein said control part decides a period during which the setting of communication channels is not executed, according to the number of said opposite communication devices for which the communication channels are newly set by said setting part in a prescribed time, and does not allow said setting part to execute the setting of communication channels during that period after the elapse of said prescribed time.

10. A wireless communication system, comprising:
a plurality of first wireless communication devices (71); and
a second wireless communication device (51) capable of performing wireless communication with said plurality of first wireless communication devices,
wherein said first wireless communication devices change an increasing rate of transmission power to said second wireless communication device, according to the number of said first wireless communication devices which are not synchronized with said second wireless communication device.

11. The wireless communication system according to claim 10, wherein
said first wireless communication devices which are not synchronized with said second wireless communication device includes said first wireless communication devices which have lost synchronization with said second wireless communication device.
